# EUROPÄISCHE PATENTSCHRIFT

(11) **EP 3 917 716 B1**
(45) Veröffentlichungstag und Bekanntmachung des Hinweises auf die Patenterteilung: **18.10.2023**
(21) Anmeldenummer: 20703703.7
(22) Anmeldetag: 30.01.2020
(51) Int. Cl.: B23K 26/064

(54) **ANORDNUNG UND VERFAHREN ZUM FORMEN EINES LASERSTRAHLS**
ARRANGEMENT AND METHOD FOR FORMING A LASER BEAM
DISPOSITIF ET PROCÉDÉ POUR FORMER UN FAISCEAU LASER

(30) Priorität: 31.01.2019 DE 102019201280
(43) Veröffentlichungstag der Anmeldung: 08.12.2021
(73) Patentinhaber: TRUMPF Laser GmbH, 78713 Schramberg (DE)
(72) Erfinder: KUMKAR, Malte, 99425 Weimar (DE); GROSSMANN, Daniel, 78713 Schramberg (DE); FLAMM, Daniel, 70806 Kornwestheim (DE); PANG, Hao, 71254 Ditzingen (DE)
(74) Vertreter: Trumpf Patentabteilung
(86) Internationale Anmeldenummer: PCT/EP2020/052308
(87) Internationale Veröffentlichungsnummer: WO 2020/157207

(56) Entgegenhaltungen:
- WO-A1-01/22131
- US-A1- 2011 170 163
- US-A1- 2014 251 963

## Beschreibung

Die Erfindung betrifft eine Anordnung sowie ein Verfahren zum Formen eines Laserstrahls. Laserstrahlen können durch beispielsweise diffraktive optische Elemente oder räumliche Lichtmodulatoren in ihrer Form beeinflusst werden, wobei insbesondere eine Phasenverteilung und/oder eine Intensitätsverteilung in einer Querschnittsebene des Laserstrahls verändert werden kann/können. Anordnungen zum Formen eines Laserstrahls (siehe die US2014/251963) sind häufig bauraumintensiv und/oder weisen eine nur geringe Flexibilität mit Blick auf die Formung des Laserstrahls auf. Weiterhin ist eine Steuerung oder Regelung der Formung des Laserstrahls in der Regel nicht oder nur schwierig, insbesondere indirekt möglich.

Der Erfindung liegt die Aufgabe zugrunde, eine Anordnung und ein Verfahren zum Formen eines Laserstrahls zu schaffen, wobei die genannten Nachteile nicht auftreten.

Die Aufgabe wird gelöst, indem die vorliegende technische Lehre bereitgestellt wird, insbesondere die Lehre der unabhängigen Ansprüche 1 und 11.

Die Aufgabe wird insbesondere gelöst, indem eine Anordnung zum Formen eines Laserstrahls geschaffen wird, die einen ansteuerbaren räumlichen Lichtmodulator aufweist, sowie eine Ansteuereinrichtung, die eingerichtet ist zur Ansteuerung des Lichtmodulators. Insbesondere ist die Ansteuereinrichtung mit dem Lichtmodulator zu dessen Ansteuerung wirkverbunden. Die Anordnung weist außerdem eine Strahlführungsoptik auf. Die Ansteuereinrichtung ist eingerichtet, um eine Anzeigeebene des Lichtmodulators in eine Mehrzahl von Anzeigebereichen zu teilen und in wenigstens einem ersten Anzeigebereich der Mehrzahl von Anzeigebereichen eine erste Strahlbeeinflussungsstruktur und in einem zweiten Anzeigebereich der Mehrzahl von Anzeigebereichen eine zweite Strahlbeeinflussungsstruktur darzustellen. Die Strahlführungsoptik ist eingerichtet, um den Laserstrahl entlang seiner Propagationsrichtung - insbesondere von einer Laserstrahlquelle des Laserstrahls oder einem vorgelagerten Anzeigebereich aus gesehen - zunächst mit dem ersten Anzeigebereich und danach mit dem zweiten Anzeigebereich in Wechselwirkung zu bringen. Die hier vorgeschlagene Anordnung ist vorteilhaft besonders kompakt ausgebildet, da derselbe räumliche Lichtmodulator mindestens zweifach verwendet wird, um den Laserstrahl zu beeinflussen, indem seine Anzeigeebene entsprechend in eine Mehrzahl von Anzeigebereichen geteilt und verschiedene Strahlbeeinflussungsstrukturen in den verschiedenen Anzeigebereichen dargestellt werden. Somit kann Bauraum für die Anordnung eingespart werden. Die Anordnung ist außerdem sehr flexibel, da mithilfe des ansteuerbaren räumlichen Lichtmodulators und der Ansteuereinrichtung bedarfsweise verschiedene Strahlbeeinflussungsstrukturen in den verschiedenen Anzeigebereichen dargestellt werden können, sodass letztlich die Funktionalität der Anordnung zum Formen des Laserstrahls ohne weiteres und schnell quasi beliebig geändert werden kann. Insbesondere kann der Laserstrahl je nach Bearbeitungsstrategie für ein mit dem Laserstahl zu bearbeitendes Werkstück modifiziert werden. Insbesondere kann so quasi ein digitaler Werkzeugwechsel verwirklicht werden. Weiterhin können Fehler im Laserstrahl kompensiert werden, die beispielsweise aus der Laserstrahlquelle und/oder dem Strahlengang resultieren.

Unter einem ansteuerbaren räumlichen Lichtmodulator wird insbesondere eine Vorrichtung verstanden, die eingerichtet ist, um Licht, insbesondere einen Laserstrahl, in zwei Dimensionen zu beeinflussen, wobei sie insbesondere eingerichtet ist, um eine Phasenverteilung, eine Polarisationsverteilung, eine Intensitäts- oder Amplitudenverteilung und/oder eine Propagationsrichtung des Lichts, insbesondere des Laserstrahls, zu beeinflussen. Dabei ist es insbesondere möglich, die Phasenverteilung, Polarisationsverteilung, und/oder Intensitäts- oder Amplitudenverteilung in zwei Dimensionen zu beeinflussen, und vorzugsweise zugleich Einfluss auf die Propagationsrichtung des Lichts zu nehmen. Insbesondere ergibt sich die Beeinflussung der Propagationsrichtung bevorzugt indirekt aus der Beeinflussung insbesondere der Phasenverteilung. Dass der räumliche Lichtmodulator ansteuerbar ist, bedeutet insbesondere, dass die Beeinflussung des Lichts durch den räumlichen Lichtmodulator einstellbar, insbesondere vorgebbar ist, wobei sie insbesondere gezielt und auf Anforderung geändert werden kann.

Bevorzugt ist der räumliche Lichtmodulator elektrisch und/oder optisch ansteuerbar, besonders bevorzugt ist er elektronisch ansteuerbar. Ein solcher räumlicher Lichtmodulator wird auch als SLM (Spatial Light Modulator) bezeichnet. Im Folgenden wird der ansteuerbare räumliche Lichtmodulator auch kurz als Lichtmodulator bezeichnet.

Der Lichtmodulator ist insbesondere digital ansteuerbar. Die Ansteuereinrichtung ist vorzugsweise eingerichtet, um den Lichtmodulator digital anzusteuern. Dies ermöglicht eine besonders flexible Ansteuerung des Lichtmodulators und damit zugleich einen flexiblen Einsatz der Anordnung.

Gemäß einer bevorzugten Ausgestaltung ist der Lichtmodulator als Flüssigkristalldisplay ausgebildet. Besonders bevorzugt ist der Lichtmodulator als LCOS-SLM (Liquid Crystal on Silicon-Spatial Light Modulator) ausgebildet.

Insbesondere weist die Anordnung genau einen und nur einen ansteuerbaren räumlichen Lichtmodulator auf.

Die Ansteuereinrichtung ist vorzugsweise frei programmierbar. Somit kann die Beeinflussung des Lichts durch den Lichtmodulator flexibel und frei vorgegeben werden.

Dass die Anzeigeebene des Lichtmodulators in eine Mehrzahl von Anzeigebereichen geteilt werden kann, bedeutet insbesondere, dass die Anzeigeebene in wenigstens zwei Anzeigebereiche geteilt werden kann. Insbesondere ist es möglich, dass die Ansteuereinrichtung eingerichtet ist, um die Anzeigeebene in genau zwei Anzeigebereiche zu teilen. Es ist aber auch möglich, dass die Ansteuereinrichtung eingerichtet ist, um die Anzeigeebene in mehr als zwei Anzeigebereiche, insbesondere in drei Anzeigebereiche, zu teilen.

Insofern ist es möglich, dass der erste Anzeigebereich und der zweite Anzeigebereich die einzigen Anzeigebereiche der Anzeigeebene sind. Es ist aber auch möglich, dass die Anzeigeebene mehr Anzeigebereiche als den ersten Anzeigebereich und den zweiten Anzeigebereich aufweist. Es ist dann möglich, dass der erste Anzeigebereich tatsächlich derjenige Anzeigebereich ist, mit dem der Laserstrahl entlang seiner Propagationsrichtung zuerst in Wechselwirkung tritt, und dass der zweite Anzeigebereich derjenige Anzeigebereich ist, mit dem der Laserstahl unmittelbar nach seiner Wechselwirkung mit dem ersten Anzeigebereich - ohne Wechselwirkung mit einem anderen Anzeigebereich dazwischen - in Wechselwirkung tritt. Der erste Anzeigebereich und der zweite Anzeigebereich können aber auch beliebige Anzeigebereiche einer Mehrzahl von Anzeigebereichen größer als zwei sein, insbesondere entlang der Propagation des Laserstrahls unmittelbar einander benachbarte Anzeigebereiche, aber auch zueinander durch wenigstens einen weiteren Anzeigebereich beabstandete Anzeigebereiche. Weiterhin ist es möglich, dass der Laserstrahl mit wenigstens einem weiteren Anzeigebereich in Wechselwirkung tritt, bevor er auf den ersten Anzeigebereich trifft, und/oder dass der Laserstrahl in Wechselwirkung mit wenigstens einem weiteren Anzeigebereich tritt, nachdem er mit dem zweiten Anzeigebereich in Wechselwirkung war.

Dass der Laserstrahl mit einem Anzeigebereich in Wechselwirkung tritt, bedeutet insbesondere, dass der Laserstahl auf den Anzeigebereich trifft, insbesondere von dem Anzeigebereich reflektiert wird. Alternativ ist es gemäß einer anderen bevorzugten Ausgestaltung auch möglich, dass der Laserstrahl durch den Anzeigebereich hindurchtritt oder durch den Anzeigebereich geleitet wird. In diesem Fall transmittiert der Anzeigebereich den Laserstrahl.

Die Worte "hinter" und "vor" werden im Folgenden stets mit Bezug auf die Propagation des Laserstrahls verwendet. Dass ein erstes Element "vor" einem zweiten Element angeordnet ist, bedeutet also, dass der Laserstrahl entlang seiner Propagation zuerst auf das erste Element und danach auf das zweite Element trifft. Entsprechend ist dann das zweite Element "hinter" dem ersten Element angeordnet.

Gemäß einer Weiterbildung der Erfindung ist vorgesehen, dass die Strahlführungsoptik mindestens einen Spiegel aufweist, der angeordnet ist, um den von dem ersten Anzeigebereich kommenden Laserstrahl zu dem zweiten Anzeigebereich zu lenken. So ist es in einfacher und kompakter Weise möglich, dass der Laserstrahl unmittelbar hintereinander zunächst mit dem ersten Anzeigebereich und danach mit dem zweiten Anzeigebereich in Wechselwirkung tritt. Dass der Laserstrahl von dem ersten Anzeigebereich kommt, bedeutet insbesondere, dass der Laserstrahl in Propagationsrichtung - insbesondere ausgehend von der Laserquelle aus gesehen - zunächst den ersten Anzeigebereich passiert und danach auf den Spiegel trifft.

Vorzugsweise ist die Strahlführungsoptik eingerichtet, um den Laserstrahl auf seinem Weg zu dem zweiten Anzeigebereich zu bündeln, also konvergieren zu lassen, und/oder um den ersten Anzeigebereich auf den zweiten Anzeigebereich abzubilden. Vorzugsweise weist die Strahlführungsoptik wenigstens ein Raumfilter auf, insbesondere um unerwünschte Strahlanteile zu entfernen. Das wenigstens eine Raumfilter kann insbesondere als Blende oder als diffraktives Element ausgebildet sein.

Gemäß einer Ausgestaltung ist hierzu vorgesehen, dass die Strahlführungsoptik im Strahlengang zwischen dem ersten Anzeigebereich und dem zweiten Anzeigebereich eine abbildende optische Anordnung, insbesondere ein abbildendes optisches Element oder eine Mehrzahl abbildender optischer Elemente, beispielsweise eine Linse, insbesondere eine Sammellinse, aufweist. Es ist auch möglich, dass der Spiegel selbst als abbildendes optisches Element ausgebildet ist, insbesondere eine Linsenfunktion aufweist, beispielsweise als Hohlspiegel ausgebildet ist. Bei dieser Ausgestaltung ist bevorzugt vorgesehen, dass sowohl der erste Anzeigebereich als auch der zweite Anzeigebereich jeweils in einer Fokusebene der abbildenden optischen Anordnung angeordnet sind. Es wird insoweit bevorzugt eine 2f-Anordnung verwirklicht. Es ist aber auch möglich, dass ein höheres Vielfaches einer 2f-Anordnung verwirklicht wird, insbesondere derart, dass eine letzte Brennebene der Anordnung eine Fourierebene der Objektebene der Anordnung, insbesondere des ersten Anzeigebereichs ist. Insbesondere ist dabei der zweite Anzeigebereich in einer Fourierebene des ersten Anzeigebereichs angeordnet. Dies kann bevorzugt mit einer nf-Anordnung verwirklicht werden, wobei n eine natürliche Zahl ist, die durch 2, nicht aber durch 4 teilbar ist (2f-, 6f-, 10f-Anordnung, usw.).

Die Bezugnahme auf eine nf-Anordnung ist nicht einschränkend darauf zu verstehen, dass alle Brennweiten der für die Anordnung verwendeten optischen Elemente gleich sein müssen. Dies kann zwar gemäß einer bevorzugten Ausgestaltung der Fall sein. Es ist aber gemäß einer anderen bevorzugten Ausgestaltung auch möglich, dass zumindest ein optisches Element der Anordnung eine Brennweite aufweist, die von einer Brennweite zumindest eines anderen optischen Elements der Anordnung verschieden ist. Letzteres kann insbesondere der Fall sein, wenn die nf-Anordnung ein Teleskop aufweist. Die Bezeichnung "nf" bezieht sich somit allgemein auf n hintereinander angeordnete Brennweiten oder Fokuslängen, keinesfalls aber zwingend spezifisch auf n gleiche Brennweiten oder Fokuslängen.

Insbesondere ist es in bevorzugter Ausgestaltung möglich, eine 6f-Anordnung, vorzugsweise mit wenigstens einem Raumfilter, zu verwirklichen: Dabei führt bevorzugt ein erstes abbildendes optisches Element eine Fokussierung und/oder Fourier-Transformation durch. In einer Brennebene dieses ersten abbildenden optischen Elements ist in einer vorgelagerten 2f-Anordnung bevorzugt ein Raumfilter angeordnet, das unerwünschte Strahlanteile entfernt. Nachfolgend ist bevorzugt eine der 2f-Anordnung nachgelagerte 4f-Anordnung von optischen Elementen angeordnet, durch welche der Laserstrahl in besonders bevorzugter Ausgestaltung vergrößert auf den zweiten Anzeigebereich abgebildet wird. Dies ermöglicht die Ausnutzung einer größeren Pixelzahl in dem zweiten Anzeigebereich und somit eine verbesserte Auflösung. Daraus ergeben sich wiederum Vorteile für die Formung insbesondere großer Laserstrahlen, beispielsweise für Logos, Bilder und/oder Intensitätsverläufe. Die 2f-Anordnung, insbesondere mit dem Raumfilter, und die nachfolgende 4f-Anordnung ergeben insgesamt die 6f-Anordnung. Räumliche Lichtmodulatoren haben die Eigenschaft, grundsätzlich auch unbeeinflusste Hintergrundstrahlung zu transmittieren oder zu reflektieren, was auch als nullte Ordnung bezeichnet wird. Das Raumfilter der vorgelagerten 2f-Anordnung kann vorteilhaft verwendet werden, um diese unerwünschte nullte Ordnung sowie vorzugsweise höhere Beugungsordnungen zu entfernen.

Alternativ oder zusätzlich ist es möglich, dass der erste Anzeigebereich selbst abbildende Eigenschaften aufweist, insbesondere dass die erste Strahlbeeinflussungsstruktur des ersten Anzeigebereichs abbildende Eigenschaften aufweist. In diesem Fall ist bevorzugt der zweite Anzeigebereich in einer Fokusebene des ersten Anzeigebereichs angeordnet. Insoweit wird bevorzugt eine 1f-Anordnung verwirklicht. Auch in diesem Fall kann allerdings unter Einbeziehung des ersten Anzeigebereichs als abbildendem optischen Element eine höhere Anordnung verwirklicht werden, insbesondere eine 2f-Anordnung, oder eine 6f-Anordnung, analog zu dem oben Ausgeführten.

Gemäß einer Weiterbildung der Erfindung ist vorgesehen, dass die Anordnung eine Diagnoseeinrichtung aufweist, die eingerichtet ist, um wenigstens eine Eigenschaft eines von wenigstens einem Anzeigebereich der Mehrzahl von Anzeigebereichen kommenden Teststrahls zu ermitteln. Somit ist es möglich, die Wirkung des wenigstens einen mittels der Diagnoseeinrichtung beobachteten Anzeigebereichs zu prüfen.

Die Diagnoseeinrichtung weist bevorzugt eine optische Aufnahmeeinrichtung zur insbesondere elektronischen Aufnahme eines Bildes, insbesondere einer zweidimensionalen Abbildung, sowie eine Auswerteeinrichtung auf, wobei die Auswerteeinrichtung mit der Aufnahmeeinrichtung wirkverbunden ist, um ein von der Aufnahmeeinrichtung aufgenommenes Bild auszuwerten. Die Diagnoseeinrichtung weist bevorzugt als Aufnahmeeinrichtung eine Kamera und als Auswerteeinrichtung eine Recheneinrichtung auf, wobei es möglich ist, dass die Diagnoseeinrichtung als Kamera mit integrierter Recheneinrichtung ausgebildet ist.

Die Auswerteeinrichtung kann gemäß einer bevorzugten Ausgestaltung aber auch Teil der Ansteuereinrichtung, oder die Funktion der Auswerteeinrichtung kann in die Ansteuereinrichtung integriert sein, so dass die Ansteuereinrichtung die Auswerteeinrichtung ist.

Insbesondere kann die Funktion der Auswerteeinrichtung als ein Hardwaremodul oder Softwaremodul in die Ansteuereinrichtung integriert sein.

Die Diagnoseeinrichtung ist bevorzugt eingerichtet, um den Lichtmodulator anzusteuern. Hierzu kann die Diagnoseeinrichtung gemäß einer bevorzugten Ausgestaltung eine separate Diagnose-Ansteuereinrichtung aufweisen, oder es kann eine Ansteuerfunktion in die als Auswerteeinrichtung ausgebildete Recheneinrichtung der Diagnoseeinrichtung integriert oder implementiert sein. Es ist aber auch möglich, dass die entsprechende Ansteuerfunktion der Diagnoseeinrichtung - insbesondere als Hardwaremodul oder Softwaremodul - in die Ansteuereinrichtung der Anordnung zum Formen des Laserstrahls integriert oder implementiert ist.

Gemäß einer Weiterbildung der Erfindung ist vorgesehen, dass die Anordnung eine Auskoppeloptik aufweist, die eingerichtet und angeordnet ist, um den von dem wenigstens einen Anzeigebereich der Mehrzahl von Anzeigebereichen kommenden Teststrahl auf die Diagnoseeinrichtung, insbesondere auf die Aufnahmeeinrichtung, zu lenken.

Gemäß einer Ausgestaltung ist vorgesehen, dass die Auskoppeloptik eingerichtet ist, um einen Teilstrahl des Laserstrahls als Teststrahl aus einem Strahlpfad des Laserstrahls auszukoppeln und auf die Diagnoseeinrichtung, insbesondere auf die Aufnahmeeinrichtung, zu lenken. Die Auskoppeloptik ist in diesem Fall bevorzugt insbesondere als teiltransparenter Spiegel oder als diffraktives optisches Element ausgebildet. Sie ist insbesondere eingerichtet, um zwischen 0,01 % und 10 %, vorzugsweise weniger als 1 %, vorzugsweise weniger als 0,01 %, der Lichtleistung des Laserstrahls aus dem Strahlpfad auszukoppeln und auf die Diagnoseeinrichtung zu lenken. In diesem Fall kann unmittelbar die Wirkung des beobachteten Anzeigebereichs auf den Laserstrahl selbst geprüft werden.

Gemäß einer anderen Ausgestaltung ist vorgesehen, dass der Laserstrahl selbst als Teststrahl verwendet wird. In diesem Fall kann vorteilhaft mittels der Diagnoseeinrichtung unmittelbar die Wirkung des Lichtmodulators auf den Laserstrahl untersucht werden. Da in diesem Fall die volle Leistung des Laserstrahls - gegebenenfalls bei reduziertem Leistungsniveau - auf die Diagnoseeinrichtung geleitet wird, ist eine simultane Bearbeitung eines Werkstücks nicht möglich. Die Diagnose des Laserstrahls mittels der Diagnoseeinrichtung ist in diesem Fall daher bevorzugt als separater Betriebsmodus vorgesehen, in den bedarfsweise geschaltet, insbesondere aus einem Bearbeitungsmodus umgeschaltet werden kann, oder der bedarfsweise aktiviert werden kann. Insbesondere kann nach Beendigung der Diagnose in den Bearbeitungsmodus umgeschaltet werden, wobei der Laserstrahl im Bearbeitungsmodus auf ein zu bearbeitendes Werkstück geleitet wird.

Gemäß einer anderen Ausgestaltung ist vorgesehen, dass - vorzugsweise parallel zu dem Laserstrahl - ein von dem Laserstrahl verschiedener, zusätzlicher Teststrahl zumindest bereichsweise durch die Anordnung geschickt wird, wobei der Teststrahl mit dem wenigstens einen zu beobachtenden Anzeigebereich in Wechselwirkung tritt und vorzugsweise - insbesondere bis zu der Auskoppeloptik - denselben Strahlengang durchläuft wie der Laserstrahl. Dabei weist der Teststrahl allerdings vorzugsweise eine von dem Laserstrahl verschiedene Wellenlänge auf. In bevorzugter Ausgestaltung ist die Auskoppeleinrichtung eingerichtet, um den Teststrahl dichroitisch von dem Laserstrahl zu trennen und somit nur den Teststrahl, jedoch keine Strahlanteile des Laserstrahls, aus dem Strahlpfad auszukoppeln. Mit der Diagnoseeinrichtung kann in vorteilhafter Weise die Wirkung des wenigstens einen beobachteten Anzeigebereichs auf den Teststrahl geprüft und ohne weiteres auf die Wirkung des Anzeigebereichs auf den Laserstrahl geschlossen werden, ohne dass Leistung des Laserstrahls aus dem Strahlpfad ausgekoppelt werden muss. Die Verwendung eines von dem Laserstrahl verschiedenen, zusätzlichen Teststrahls hat außerdem den Vorteil, dass ein Wechsel oder eine Veränderung in der Leistung des Laserstrahls, beispielsweise bei einem Wechsel von Bearbeitungsparametern, nicht zu Problemen mit einem Dynamikumfang der Diagnoseeinrichtung führt. Vielmehr kann die Leistung des zusätzlichen Teststrahls unabhängig von der momentanen Leistung des Laserstrahls gewählt und insbesondere auf den dynamischen Bereich der Diagnoseeinrichtung abgestimmt werden.

Weiterhin ist es bei der Verwendung eines von dem Laserstrahl verschiedenen Teststrahls möglich, eine Mehrzahl von Anzeigebereichen, insbesondere auch alle Anzeigebereiche des Lichtmodulators, zugleich zu beobachten. In diesem Fall folgt der zusätzliche Teststrahl vorteilhaft nicht dem Strahlengang des Laserstrahls, sondern trifft vielmehr zugleich auf eine Mehrzahl von Anzeigebereichen, insbesondere auf alle Anzeigebereiche, des Lichtmodulators, und wird anschließend auf die Diagnoseeinrichtung geführt, die dann bevorzugt eine bereichsweise Auswertung vornimmt.

Der von dem Laserstrahl verschiedene, zusätzlich Teststrahl wird bevorzugt durch eine separate Strahlquelle erzeugt, insbesondere durch eine Laserdiode oder eine Leuchtdiode, insbesondere LED. Durch die separate Strahlquelle wird bevorzugt eine definierte, lineare Polarisation des zusätzlichen Teststrahls erzeugt, gegebenenfalls mittels eines zusätzlich vorgesehenen Polarisators.

Die Auskoppeloptik ist bevorzugt eingerichtet, um den Lichtmodulator, insbesondere wenigstens einen Anzeigebereich des Lichtmodulators, auf die Diagnoseeinrichtung, insbesondere auf die Aufnahmeeinrichtung, abzubilden.

Bevorzugt ist die Auskoppeloptik eingerichtet, um wahlweise verschiedene Anzeigebereiche der Mehrzahl von Anzeigebereichen auf die Diagnoseeinrichtung abzubilden. Hierzu sind insbesondere Abbildungseigenschaften der Auskoppeloptik änderbar, sodass bedarfsweise ein gewünschter Anzeigebereich auf die Diagnoseeinrichtung abgebildet werden kann.

Die Diagnoseeinrichtung ist gemäß einer bevorzugten Ausgestaltung in die Anordnung zum Formen des Laserstrahls integriert, das heißt Teil der Anordnung zum Formen des Laserstrahls.

Gemäß einer anderen bevorzugten Ausgestaltung ist die Diagnoseeinrichtung als gesonderte, selbständige Einrichtung ausgebildet, die bedarfsweise zusammen mit der Anordnung verwendet werden kann. Die separat ausgebildete Diagnoseeinrichtung weist in diesem Fall bevorzugt zumindest die Auskoppeloptik und die Aufnahmeeinrichtung, so wie vorzugsweise die Auswerteeinrichtung auf. Bevorzugt weist die Diagnoseeinrichtung zusätzlich eine separate Ansteuereinrichtung zur Ansteuerung des Lichtmodulators auf. Es ist bevorzugt auch möglich, dass die Diagnoseeinrichtung mit der Ansteuereinrichtung der Anordnung zum Formen des Laserstrahls wirkverbindbar ist, um den Lichtmodulator mittels der Ansteuereinrichtung der Anordnung anzusteuern. In bevorzugter Ausgestaltung weist die Diagnoseeinrichtung weiterhin eine Polarisationstrenneinrichtung auf, die im Strahlengang des Teststrahls zwischen dem Lichtmodulator und der Aufnahmeeinrichtung angeordnet ist, wenn die Diagnoseeinrichtung mit der Anordnung zum Formen des Laserstrahls verwendet wird.

Gemäß einer Weiterbildung der Erfindung ist vorgesehen, dass die Diagnoseeinrichtung mit der Ansteuereinrichtung wirkverbunden ist, um den Lichtmodulator abhängig von einer durch die Diagnoseeinrichtung vorgenommenen Auswertung von wenigstens einer Eigenschaft des Teststrahls anzusteuern. Auf diese Weise wird eine Rückkopplung zwischen der Diagnoseeinrichtung und dem Lichtmodulator geschaffen, die es ermöglicht, die Wirkung des Lichtmodulators auf den Laserstrahl in Abhängigkeit von der Auswertung durch die Diagnoseeinrichtung zu verändern. Bevorzugt sind die Diagnoseeinrichtung und die Ansteuereinrichtung eingerichtet, um durch den Lichtmodulator beeinflusste Eigenschaften des Laserstrahls zu regeln. In besonders vorteilhafter Weise wird so eine Regelung mit geschlossenem Regelkreis bereitgestellt (closed-loop-Regelung). Die Regelung kann insbesondere auf der Basis von Freiform-(Phasen)oberflächen und/oder anderen geeigneten Algorithmen erfolgen. Insbesondere ist bevorzugt ein - vorzugsweise rauschresistenter - Optimierungsalgorithmus in die Recheneinrichtung implementiert, beispielsweise ein evolutionärer oder genetischer Algorithmus oder ein neuronales Netz, um die Wirkung des Lichtmodulators auf den Laserstrahl mit Blick auf wenigstens eine gewünschte Eigenschaft desselben zu optimieren.

Als die wenigstens eine Eigenschaft des Teststrahls wird durch die Diagnoseeinrichtung bevorzugt eine Amplitudenverteilung oder Intensitätsverteilung, eine Phasenverteilung, oder eine Polarisationsverteilung in einer Bildebene der Diagnoseeinrichtung, insbesondere der Aufnahmeeinrichtung, ausgewertet. Die Abbildung auf die Bildebene wird dabei - insbesondere mittels der Auskoppeloptik - bevorzugt so gewählt, dass das elektrische Feld des Teststrahls in der Bildebene in Phasen- und Amplitudenverteilung - bis gegebenenfalls auf eine Skalierung und/oder Polarisationsänderung - genau gleich dem elektrischen Feld des Laserstrahls am Ort einer vorbestimmten Zielebene, beispielsweise einer Bearbeitungsebene zur Bearbeitung eines Werkstücks, ist. Auf diese Weise kann direkt die gewünschte Eigenschaft des Laserstrahls in der Zielebene untersucht werden. Bei der Verwendung eines von dem Laserstrahl verschiedenen Teststrahls ist es gemäß einer bevorzugten Ausgestaltung auch möglich, ein durch Polarisation codiertes Bild einer Strahlbeeinflussungsstruktur zu erhalten. Insbesondere kann der Teststrahl derart linear polarisiert auf den Lichtmodulator treffen, dass eine dort zur Phasenbeeinflussung des Laserstrahls vorgesehene Strahlbeeinflussungsstruktur pixelweise auf die Polarisation des Teststrahls wirkt, sodass dessen Polarisation letztlich als Code für die Phaseninformation der beobachteten Strahlbeeinflussungsstruktur verwendet werden kann. Somit lassen sich dann insbesondere Abweichungen zwischen der gemessenen Phasenbeeinflussungsstruktur und einer berechneten Phasenbeeinflussungsstruktur zur Korrektur nutzen. Hierzu wird insbesondere die Polarisation des Teststrahls beim Auftreffen auf die zu beobachtende Phasenbeeinflussungsstruktur abweichend von der Polarisation des Laserstrahls gewählt, sodass die zu beobachtende Phasenbeeinflussungsstruktur die Polarisation des Teststrahls lokal verändert, jedoch die Polarisation des Laserstrahls unbeeinflusst lässt. Wird die Diagnoseeinrichtung in Kombination mit einer Polarisationstrenneinrichtung verwendet, wird bevorzugt eine durch den Lichtmodulator bewirkte Polarisationsänderung mittels der Polarisationstrenneinrichtung in eine Intensitätsänderung umgesetzt; in diesem Fall weicht die Amplitudenverteilung in der Bildebene der Diagnoseeinrichtung von derjenigen in der Zielebene ab.

Gemäß einer bevorzugten Ausgestaltung ist die Diagnoseeinrichtung eingerichtet, um eine Polarisation des Teststrahls für jeden Pixel des beobachteten Anzeigebereichs des Lichtmodulators zu prüfen. Dazu kann die Diagnoseeinrichtung insbesondere ein Polarisationsmikroskop aufweisen oder eingerichtet sein, um eine Polarisationsmikroskopaufnahme des beobachteten Anzeigebereichs vorzunehmen. Somit kann der Lichtmodulator in dem beobachteten Anzeigebereich Pixel für Pixel daraufhin geprüft werden, ob Fehler im Vergleich zu einer gewünschten Polarisationsdrehung auftreten, wobei insbesondere diese Fehler dann durch geeignete pixelweise Anpassung der Ansteuerung des Lichtmodulators ausgeglichen werden können. Auf diese Weise kann insbesondere eine Alterung des Lichtmodulators ausgeglichen werden.

Gemäß einem weiteren Aspekt der Erfindung wird - vorzugsweise in Kombination mit der hier vorgeschlagenen Anordnung und insbesondere in Kombination mit wenigstens einem Merkmal der Anordnung - eine Diagnoseeinrichtung geschaffen, die eingerichtet ist, um einen ansteuerbaren Lichtmodulator, insbesondere den Lichtmodulator der Anordnung, zu kalibrieren, indem eine Ansteuerung des Lichtmodulators über ein Ansteuerintervall durchgestimmt wird, wobei für mindestens zwei Ansteuerbereiche des Lichtmodulators eine dem jeweiligen Ansteuerbereich zugeordnete Intensität eines mit dem Lichtmodulator wechselwirkenden Teststrahls in Abhängigkeit von der Ansteuerung des Lichtmodulators mittels einer optischen Aufnahmeeinrichtung der Diagnoseeinrichtung erfasst wird, wobei die jeweiligen Intensitäten bei gleicher Ansteuerung miteinander verglichen werden, und wobei eine Korrektur der Ansteuerung für die mindestens zwei Ansteuerbereiche auf der Grundlage des Vergleichs ermittelt wird. Die Diagnoseeinrichtung ist so vorteilhaft in der Lage, ein unterschiedliches Verhalten verschiedener Ansteuerbereiche des Lichtmodulators bei gleicher Ansteuerung zu erfassen, und dann eine geeignete Kalibration für den Lichtmodulator bereitzustellen, um diese individuellen Unterschiede in der Reaktion der verschiedenen Ansteuerbereiche auszugleichen.

Insbesondere kann auf diese Weise vorteilhaft eine reproduzierbare Antwort des Lichtmodulators über eine Mehrzahl von Ansteuerbereichen erhalten werden.

Die Diagnoseeinrichtung gemäß einem weiteren Aspekt ist bevorzugt die zuvor beschriebene Diagnoseeinrichtung der Anordnung. Die optische Aufnahmeeinrichtung ist bevorzugt die zuvor beschriebene optische Aufnahmeeinrichtung der zuvor beschriebenen Diagnoseeinrichtung der Anordnung.

In bevorzugter Ausgestaltung ist die Diagnoseeinrichtung als Messmodul ausgebildet. Bevorzugt weist die Diagnoseeinrichtung eine Optik, vorzugsweise die zuvor beschriebene Auskoppeloptik der Anordnung auf, die eingerichtet ist, um wenigstens einen Anzeigebereich des Lichtmodulators auf die Aufnahmeeinrichtung abzubilden.

Die Diagnoseeinrichtung ist insbesondere eingerichtet, um zumindest einen Anzeigebereich des Lichtmodulators zu kalibrieren. Vorzugsweise ist die Diagnoseeinrichtung eingerichtet, um mehrere Anzeigebereiche des Lichtmodulators - nacheinander oder zugleich, insbesondere gemeinsam - zu kalibrieren. Besonders bevorzugt ist die Diagnoseeinrichtung eingerichtet, um alle Anzeigebereiche des Lichtmodulators zugleich, insbesondere gemeinsam, zu kalibrieren.

Insbesondere ist die Diagnoseeinrichtung eingerichtet, um die Ansteuerung des mit dem Teststrahl wechselwirkenden, insbesondere des mit dem Teststrahl bestrahlten Lichtmodulators über das Ansteuerintervall durchzustimmen.

Unter einem Ansteuerintervall wird hier insbesondere ein Skalenbereich für die Ansteuerung des Lichtmodulators verstanden, über den die Ansteuerung variiert werden kann. Beträgt beispielsweise ein Ansteuerumfang des digital ansteuerbaren Lichtmodulators 8 Bit, umfasst das gesamte Ansteuerintervall die Zahlenwerte von 0 bis 255. Insbesondere können diesen Zahlenwerten Graustufen des Lichtmodulators entsprechen.

Vorzugsweise wird die Ansteuerung des Lichtmodulators über das gesamte Ansteuerintervall durchgestimmt. In dem Beispiel eines Ansteuerumfangs von 8 Bit werden also bevorzugt alle Ansteuerwerte von 0 bis 255 - insbesondere zeitlich nacheinander, vorzugsweise in streng aufsteigender oder streng absteigender Reihenfolge - angenommen. Es ist aber in bevorzugter Ausgestaltung auch möglich, dass die Ansteuerung des Lichtmodulators nur über einen Teilbereich oder über eine Mehrzahl von Teilbereichen des Ansteuerintervalls durchgestimmt wird. In einer bevorzugten Ausgestaltung überlappen die Teilbereiche nicht miteinander. Vorzugsweise sind die Teilbereiche voneinander beabstandet, sie grenzen also nicht unmittelbar aneinander an.

Die Durchstimmung der Ansteuerung wird vorzugsweise für alle Pixel mindestens eines Anzeigebereichs, oder des gesamten Lichtmodulators, - insbesondere zugleich - durchgeführt, was einer homogenen Ansteuerung des mindestens einen Anzeigebereichs, oder des gesamten Lichtmodulators, entspricht. Insbesondere wird so ein homogenes Grauwertbild über den gesamten Lichtmodulator, oder zumindest über den untersuchten Anzeigebereich des Lichtmodulators, erhalten. Es ist aber auch möglich, dass die Ansteuerung nur für eine Auswahl von Pixeln des Lichtmodulators durchgeführt wird. Beispielsweise ist es möglich, dass die Ansteuerung nur für eine in dem Sinne relevante Auswahl von Pixeln des Lichtmodulators durchgeführt wird, dass diese Pixel tatsächlich mit dem Teststrahl wechselwirken oder bestrahlt werden.

Unter einem Ansteuerbereich wird insbesondere ein individuell angesteuerter Bereich des Lichtmodulators verstanden. Ein solcher Ansteuerbereich kann insbesondere ein einzelner Pixel oder eine Pixelregion, das heißt insbesondere eine zusammenhängende Gruppe von gemeinsam angesteuerten Pixeln, sein.

Die Ansteuerbereiche werden - insbesondere durch die Auskoppeloptik - bevorzugt auf die Aufnahmeeinrichtung abgebildet. Hierdurch kann den einzelnen Ansteuerbereichen jeweils eine Intensität auf der Aufnahmeeinrichtung zugeordnet werden. Dabei ist eine Eins-zu-eins-Abbildung einzelner Pixel oder Pixelregionen des Lichtmodulators auf einzelne Pixel oder Pixelregionen der Aufnahmeeinrichtung möglich. Es ist selbstverständlich auch eine Vergrößerung oder Verkleinerung möglich, sodass beispielsweise ein einzelner Pixel des Lichtmodulators auf eine Pixelregion der Aufnahmeeinrichtung abgebildet wird, oder dass umgekehrt eine Pixelregion aus einer Mehrzahl von Pixeln des Lichtmodulators auf einen einzelnen Pixel der Aufnahmeeinrichtung abgebildet wird.

Die Diagnoseeinrichtung ist insbesondere eingerichtet, um eine Korrekturmaske zu erstellen. Eine solche Korrekturmaske ist bevorzugt insbesondere eine Korrekturkarte mit Korrekturwerten, die den verschiedenen Ansteuerbereichen des Lichtmodulators zur Korrektur der jeweiligen Ansteuerung zugeordnet sind. Bevorzugt ist die Diagnoseeinrichtung eingerichtet, um die Korrekturmaske - in Echtzeit oder zeitlich unabhängig in gespeicherter Form - an die Ansteuereinrichtung der Anordnung für eine entsprechend korrigierte, das heißt insbesondere kalibrierte, Ansteuerung des Lichtmodulators zu übermitten.

Gemäß einer Weiterbildung der Erfindung ist vorgesehen, dass die Diagnoseeinrichtung eine Polarisationstrenneinrichtung aufweist, die zwischen dem Lichtmodulator und der Aufnahmeeinrichtung angeordnet ist. Die Polarisationstrenneinrichtung ist eingerichtet, um eine Polarisationsfilterung verschieden polarisierter Strahlanteile des Teststrahls durchzuführen. Die Polarisationstrenneinrichtung kann in bevorzugter Ausgestaltung die Polarisationstrenneinrichtung der Strahlformoptik der Anordnung sein, die im Folgenden noch beschrieben wird. Bevorzugt ist die Polarisationstrenneinrichtung entlang des Strahlengangs des Teststrahls vor der Optik, insbesondere vor der Auskoppeloptik, angeordnet. Bevorzugt ist die Polarisationstrenneinrichtung als Dünnschichtpolarisator (Thin-Film-Polarizer - TFP) ausgebildet oder weist einen solchen Dünnschichtpolarisator auf. Es ist alternativ bevorzugt möglich, dass die Polarisationstrenneinrichtung als Polarisationsstrahlteiler ausgebildet ist. Es ist möglich, dass die Polarisationstrenneinrichtung vor dem Dünnschichtpolarisator eine verstellbare λ/2-Platte aufweist, durch die bevorzugt die durch den Lichtmodulator veränderte Polarisation auf den Dünnschichtpolarisator ausgerichtet werden kann.

Vorzugsweise ist die Diagnoseeinrichtung eingerichtet, um, wenn eine insbesondere lineare Polarisation des Teststrahls auf dem Lichtmodulator - insbesondere relativ zu dem Lichtmodulator - so ausgerichtet ist, dass der Lichtmodulator einen Polarisationszustand des Teststrahls abhängig von seiner Ansteuerung verändert, eine Phasenverschiebung zwischen in Abhängigkeit von der Ansteuerung erfassten Intensitätsverläufen der mindestens zwei Ansteuerbereiche zu bestimmen, sowie um die Korrektur in Abhängigkeit von der Phasenverschiebung zu ermitteln. Dies ermöglicht eine besonders funktionssichere und einfache Ermittlung der Korrektur, insbesondere Erstellung der Korrekturmaske. Insbesondere ist der Polarisationsvektor des linear polarisierten Testrahls dabei so ausgerichtet, dass er nicht parallel zu einer Kristallachse der Kristalle des Lichtmodulators ausgerichtet ist, wobei er bevorzugt ungefähr 45°, vorzugsweise 45°, zu einer ersten Kristallachse der Kristalle ausgerichtet ist.

Der Polarisationszustand des Teststrahls wird dabei durch den Lichtmodulator insbesondere lokal verändert.

Unter dem Polarisationszustand des Teststrahls wird dabei insbesondere verstanden, wie der Teststrahl polarisiert ist, insbesondere linear, elliptisch oder zirkular, und/oder welche Polarisationsrichtung der Teststrahl aufweist.

Um die Funktionsweise der Kalibration anschaulich darzustellen, kann stark vereinfachend und nur zu Erläuterungszwecken angenommen werden, dass der Lichtmodulator in diesem Fall wie eine λ/2-Platte wirken würde, deren polarisationsdrehende Eigenschaft durch das Durchstimmen der Ansteuerung über das Ansteuerintervall verändert wird. Dabei wird dann gemäß dieser stark vereinfachenden Betrachtung die Polarisationsrichtung des Teststrahls beim Durchstimmen der Ansteuerung des Lichtmodulators gedreht, wodurch sich im Zusammenspiel mit der Polarisationstrenneinrichtung ein - insbesondere periodisch - variierender Intensitätsverlauf auf der Aufnahmeeinrichtung ergibt. Tatsächlich erfährt der Polarisationszustand des Teststrahls eine Phasenänderung entsprechend der Kristallachsen.

Die jeweilige Phasenlage dieser insbesondere periodisch in Abhängigkeit von der Ansteuerung variierenden Intensität hängt dabei von den lokal unterschiedlichen Eigenschaften der Ansteuerbereiche, insbesondere der einzelnen Pixel des Lichtmodulators, ab.

Werden daher die verschiedenen Phasenlagen der Intensitätsverläufe, die den einzelnen Ansteuerbereichen zugeordnet sind, miteinander verglichen, und insbesondere die jeweiligen Phasenabweichungen ermittelt, kann daraus auf die lokalen Abweichungen im Verhalten der einzelnen Ansteuerbereiche geschlossen werden. Es kann dann eine entsprechende Korrektur für die Ansteuerung ermittelt werden, insbesondere in Form einer Korrekturmaske. Die entsprechende, real über die verschiedenen Ansteuerbereiche, insbesondere Pixel, des Lichtmodulators stark schwankende Phasenverteilung kann durch die geeignete Korrektur der Ansteuerung vereinheitlicht, insbesondere homogenisiert werden.

Da das Verhalten der einzelnen Ansteuerbereiche, insbesondere Pixel, mit fortschreitender Zeit, insbesondere mit fortschreitender Wechselwirkung mit dem Laserstrahl, wieder auseinander driftet, wird der entsprechende Kalibrationsprozess bevorzugt kontinuierlich durchgeführt oder - insbesondere bedarfsabhängig oder regelmäßig - wiederholt. Dabei kann insbesondere ein ortsaufgelöster Vergleich einer Soll-Intensitätsverteilung mit einer Ist-Intensitätsverteilung auf der Aufnahmeeinrichtung nach Polarisationstrennung durchgeführt werden.

In bevorzugter Ausgestaltung ist hierfür die Diagnoseeinrichtung in einen Bearbeitungskopf der Anordnung integriert. Alternativ kann die Kalibration mittels der separat vorgesehenen Diagnoseeinrichtung und/oder in einem separat vorgesehenen Kalibrationsmodus der Anordnung wiederholt werden.

Gemäß einer Weiterbildung der Erfindung ist vorgesehen, dass die Diagnoseeinrichtung eingerichtet ist, um die Korrektur der Ansteuerung für eine Mehrzahl von Ansteuerbereichen in Abhängigkeit von einem Strahlparameter und/oder einer Strahlwirkung des Teststrahls auf dem Lichtmodulator - vorzugsweise global oder lokal - zu ermitteln, wobei der Strahlparameter bevorzugt ausgewählt ist aus einer Gruppe, bestehend aus: Einer Fluenz, einer Intensität, und einer mittleren Leistung; die Strahlwirkung ist bevorzugt eine Temperatur. Dies ist vorzugsweise zusätzlich oder alternativ zu der zuvor beschriebenen Korrektur der Ansteuerung für die einzelnen Ansteuerbereiche möglich. Insoweit hat sich herausgestellt, dass das Verhalten des Lichtmodulators, insbesondere der Einfluss der einzelnen Ansteuerbereiche auf die Polarisation des Laserstrahls, abhängig von dem Strahlparameter und/oder der Strahlwirkung ist, insbesondere da sich die einzelnen Flüssigkristalle des Lichtmodulators in dem elektrischen Feld des Laserstrahls ausrichten. Dabei können sich verschiedene Flüssigkristalle abhängig von der lokalen Feldstärke verschieden ausrichten. Es erweist sich daher insbesondere als vorteilhaft, den Lichtmodulator abhängig von dem wenigstens einen Strahlparameter und/oder der Strahlwirkung zu kalibrieren.

Gemäß einer Weiterbildung der Erfindung ist vorgesehen, dass die Anordnung eine Strahlformoptik aufweist, die angeordnet und eingerichtet ist, um eine Polarisation des Laserstrahls zwischen dem ersten Anzeigebereich und dem zweiten Anzeigebereich zu verändern. Insbesondere ist die Strahlformoptik bevorzugt angeordnet und eingerichtet, um eine lineare Polarisation des Laserstrahls zwischen dem ersten Anzeigebereich und dem zweiten Anzeigebereich zu drehen. Dies ermöglicht es insbesondere, in einem der Anzeigebereiche, insbesondere in dem ersten Anzeigebereich, die Polarisation des Laserstrahls nicht zu verändern, jedoch in einem anderen Anzeigebereich der Anzeigebereiche, insbesondere in dem zweiten Anzeigebereich, die Polarisation des Laserstrahls lokal zu beeinflussen. Insbesondere ist es möglich, dass der Laserstrahl zunächst mit einer bestimmten linearen Polarisation auf den ersten Anzeigebereich trifft, die es erlaubt, in dem ersten Anzeigebereich die Polarisation des Laserstrahls unbeeinflusst zu lassen, insbesondere ausschließlich die Phase des Laserstrahls, nicht aber dessen Polarisation lokal zu beeinflussen. Insbesondere kann dabei die lineare Polarisation des Laserstrahls parallel zu einer Kristallachse der Kristalle des Lichtmodulators ausgerichtet sein. Im Strahlengang zwischen dem ersten Anzeigebereich und dem zweiten Anzeigebereich kann dann die lineare Polarisation des Laserstrahls so gedreht werden, dass die Polarisation des Laserstrahls durch den zweiten Anzeigebereich lokal, insbesondere pixelweise, beeinflusst werden kann. Hierzu wird die lineare Polarisation des Laserstrahls bevorzugt so gedreht, dass sie zu keiner der beiden Kristallachsen der bevorzugt doppelbrechenden Kristalle des Lichtmodulators mehr parallel ist. Durch eine geeignete Beeinflussung der einzelnen Kristalle des Lichtmodulators kann dann aufgrund von deren doppelbrechender Wirkung wiederum die lokale Polarisation des Laserstrahls pixelweise beeinflusst werden.

Die Strahlformoptik ist bevorzugt ansteuerbar, sodass die Polarisation des Laserstrahls zwischen dem ersten Anzeigebereich und dem zweiten Anzeigebereich variabel, insbesondere in vorbestimmter Weise, insbesondere bedarfsgerecht, geändert werden kann. Insbesondere ist es bevorzugt möglich, dass die Polarisation des Laserstrahls durch die Strahlformoptik wahlweise nicht verändert oder verändert wird.

Die Strahlformoptik weist bevorzug vor dem ersten Anzeigebereich - in Propagationsrichtung des Laserstrahls gesehen - eine λ/2-Platte auf, um eine lineare Polarisation des Laserstrahls definiert auszurichten.

Vorzugsweise weist die Strahlformoptik zwischen dem ersten Anzeigebereich und dem zweiten Anzeigebereich einen Umlenkspiegel auf, wobei vor dem Umlenkspiegel eine λ/4-Platte derart angeordnet ist, dass der Laserstrahl die λ/4-Platte zweimal passiert, nämlich einmal vor dem Auftreffen auf den Umlenkspiegel und ein zweites Mal nach dem Auftreffen auf den Umlenkspiegel. Der Umlenkspiegel ist dabei in bevorzugter Ausgestaltung der Spiegel, den die Strahlführungsoptik aufweist, um den von dem ersten Anzeigebereich kommenden Laserstrahl zu dem zweiten Anzeigebereich zu lenken. Der Umlenkspiegel ist also in bevorzugter Ausgestaltung sowohl der Strahlführungsoptik als auch der Strahlformoptik zugeordnet. Durch die derart angeordnete λ/4-Platte wird die lineare Polarisation des Laserstrahls zwischen dem ersten Anzeigebereich und dem zweiten Anzeigebereich um einen definierten Winkel gedreht. Besonders bevorzugt ist die λ/4-Platte um 22,5° relativ zu dem Polarisationsvektor des von dem ersten Anzeigebereichs kommenden Laserstrahls gedreht, sodass dieser Polarisationsvektor nach zweimaligem Passieren der λ/4-Platte um 45° gedreht ist.

Alternativ zu dem einen Umlenkspiegel mit vorgeschalteter λ/4-Platte ist es auch möglich, den Laserstrahl zwischen dem ersten Anzeigebereich und dem zweiten Anzeigebereich über mindestens zwei Umlenkspiegel zu führen, wobei zwischen den zwei Umlenkspiegeln eine λ/2-Platte angeordnet ist, durch welche die Polarisation des Laserstrahls analog zu der zuvor beschriebenen effektiven Wirkung der λ/4-Platte gedreht werden kann.

Gemäß einer Weiterbildung der Erfindung weist die Strahlformoptik eine Polarisationstrenneinrichtung, auch als Polarisationsfiltereinrichtung bezeichnet, auf, die angeordnet und eingerichtet ist, um eine Polarisationsfilterung verschieden polarisierter Strahlanteile des von dem zweiten Anzeigebereich kommenden Laserstrahls durchzuführen, insbesondere verschieden polarisierte Strahlanteile des von dem zweiten Anzeigebereich kommenden Laserstrahls voneinander zu trennen. Dies erlaubt in vorteilhafter Weise eine besonders definierte und trennscharfe Formung des Laserstrahls, aber auch die Darstellung von Intensitätsverläufen, insbesondere eine Beeinflussung der Amplituden- oder Intensitätsverteilung des Laserstrahls. Indem nämlich durch den zweiten Anzeigebereich die Polarisation des Laserstrahls lokal zweidimensional definiert eingestellt ist, und nun durch die Polarisationstrenneinrichtung in bestimmter Weise polarisierte Strahlanteile des Laserstrahls zumindest teilweise gedämpft oder quasi entsorgt werden können, bleiben letztlich bestimmte Strahlanteile hinter der Polarisationstrenneinrichtung übrig, die von bestimmten Pixeln des zweiten Anzeigebereichs her kommen, oder es sind bestimmte Strahlanteile, die von bestimmten Pixeln des zweiten Anzeigebereichs her kommen, hinter der Polarisationstrenneinrichtung in definierter Weise abgeschwächt. Auf diese Weise kann der Laserstrahl daher insbesondere mit hoher Schärfe quasi beliebig geformt werden, wobei die Intensitätsverteilung des Laserstrahls in dessen Querschnittsebene beliebige Geometrien annehmen kann, die mittels der Strahlformoptik variabel eingestellt werden können. Dabei ist eine binäre Trennung bestimmter Polarisationen möglich, es sind aber auch Intensitätsverläufe darstellbar, beispielsweise indem für die von einem bestimmten Pixel kommende Polarisationsrichtung eine Aufteilung in einen transmittierten Anteil und einen reflektierten Anteil, beispielsweise 30 % Transmission und 70 % Reflexion, verwirklicht wird.

Die Polarisationstrenneinrichtung ist insbesondere - in Propagationsrichtung gesehen - hinter dem zweiten Anzeigebereich angeordnet. Vorzugsweise weist die Polarisationstrenneinrichtung einen Dünnschichtpolarisator (Thin-Film Polarizer - TFP) auf, sowie vorzugsweise vor dem Dünnschichtpolarisator eine verstellbare λ/2-Platte, durch die bevorzugt die durch den Lichtmodulator veränderte Polarisation auf den Dünnschichtpolarisator ausgerichtet werden kann. Insoweit hat sich herausgestellt, dass die Wirkung des Lichtmodulators alleine in manchen Fällen nicht ausreicht, um die Polarisation in geeigneter Weise auf den Dünnschichtpolarisator auszurichten. Zusätzlich oder alternativ kann mittels der verstellbaren λ/2-Platte bevorzugt eingestellt werden, welcher Bruchteil der Intensität des Laserstrahls polarisationsabhängig durch den Dünnschichtpolarisator abgetrennt wird.

Die durch den Dünnschichtpolarisator abgetrennten Strahlanteile werden bevorzugt in eine Strahlfalle (beam dump) gelenkt und somit beseitigt.

Gemäß einer Weiterbildung der Erfindung ist vorgesehen, dass die Strahlformoptik zwischen einem ersten, abgeschalteten Funktionszustand der Strahlformoptik und einem zweiten, zugeschalteten Funktionszustand der Strahlformoptik schaltbar eingerichtet ist. Dabei wird die Polarisation des Laserstrahls in dem zweiten, zugeschalteten Funktionszustand zwischen dem ersten Anzeigebereich und dem zweiten Anzeigebereich verändert, und in dem ersten, abgeschalteten Funktionszustand nicht verändert. Auf diese Weise kann variabel und bedarfsweise ausgewählt werden, ob die Polarisation des Laserstrahls zwischen dem ersten Anzeigebereich und dem zweiten Anzeigebereich verändert werden soll, und damit zugleich insbesondere, ob die Polarisation des Laserstrahls durch den zweiten Anzeigebereich lokal verändert werden soll.

Bevorzugt ist die Strahlformoptik schaltbar eingerichtet, indem wenigstens ein optisches Element der Strahlformoptik räumlich wahlweise in einen Strahlpfad des Laserstrahls hinein und aus dem Strahlpfad heraus verlagerbar ist. Hierzu ist in bevorzugter Ausgestaltung eine geeignete, vorzugsweise automatisch ansteuerbare, Verlagerungsmechanik vorgesehen.

Alternativ oder zusätzlich ist das wenigstens eine optische Element der Strahlformoptik bevorzugt zwischen zwei Schaltzuständen des optischen Elements im Strahlpfad des Laserstrahls schaltbar. In diesem Fall verbleibt das optische Element in dem Strahlpfad, wird aber bedarfsweise zwischen den beiden Schaltzuständen hin- und hergeschaltet. Gemäß einer Ausgestaltung ist dieses zwischen zwei Schaltzuständen schaltbare optische Element die λ/4-Platte der Strahlformoptik, die - vorzugsweise automatisiert, insbesondere motorisiert - bezüglich ihrer Orientierung relativ zu dem Polarisationsvektor des von dem ersten Anzeigebereich kommenden Laserstrahls gedreht werden kann, um wahlweise die lineare Polarisation des Laserstrahls zwischen dem ersten Anzeigebereich und dem zweiten Anzeigebereich relativ zu der Kristallachse der Lichtmodulatorkristalle zu drehen oder parallel zu der Kristallachse zu halten. Dazu kann die λ/4-Platte beispielsweise auf einem Hohlwellenmotor angeordnet sein. In analoger Weise kann selbstverständlich auch eine zwischen zwei Umlenkspiegeln angeordnete λ/2-Platte entsprechend gedreht werden. Die Strahlformoptik kann aber auch als schaltbares optisches Element einen Polarisationsmodulator auf Flüssigkristallbasis aufweisen, der insbesondere zwischen einem aktiven und einem inaktiven Zustand geschaltet werden kann, wobei er in dem aktiven Zustand die Polarisation des Laserstrahls verändert, und in dem inaktiven Zustand unangetastet lässt.

Wie bereits zuvor ausgeführt, ist es möglich, dass die Anzeigeebene des Lichtmodulators in mehr als zwei Anzeigebereiche unterteilt ist, wobei es insbesondere möglich ist, dass der Laserstrahl vor seiner Wechselwirkung mit dem zuvor beschriebenen ersten Anzeigebereich auf einen vorgelagerten, weiteren Anzeigebereich trifft. Insbesondere ist es gemäß einer Ausgestaltung möglich, dass der zuvor beschriebene erste Anzeigebereich entlang der Propagationsrichtung des Laserstrahls gesehen ein zweiter Anzeigebereich ist, wobei der zuvor beschriebene zweite Anzeigebereich ein dritter Anzeigebereich ist, wobei dem zweiten Anzeigebereich ein zuvor nicht beschriebener, zusätzlicher erster Anzeigebereich vorgelagert ist. Dabei ist insbesondere eine Ausgestaltung möglich - was im Folgenden noch in Zusammenhang mit dem Verfahren zum Formen eines Laserstrahls näher erläutert wird -, bei der die Polarisation des Laserstrahls zwischen dem zweiten Anzeigebereich und dem dritten Anzeigebereich verändert wird, wobei sie zwischen dem neu eingeführten ersten Anzeigebereich und dem zweiten Anzeigebereich nicht verändert wird. Somit würde der dritte Anzeigebereich in der zuvor beschriebenen Weise die Polarisation des Laserstrahls lokal beeinflussen.

Gemäß einer Weiterbildung der Erfindung ist vorgesehen, dass die Anordnung eine Bearbeitungsoptik aufweist, die angeordnet und eingerichtet ist, um den von dem Lichtmodulator kommenden Laserstrahl auf ein Werkstück zu leiten, insbesondere zur Bearbeitung des Werkstücks mittels des Laserstrahls. Die Anordnung ist also insbesondere zur Bearbeitung eines Werkstücks eingerichtet und vorgesehen. Insbesondere kann mittels des Laserstrahls ein Materialabtrag, beispielsweise durch Laserbohren, Laserfräsen, Laserpolieren, Laserschneiden, oder dergleichen, durchgeführt werden. Insbesondere können metallische Werkstücke oder Invar-Folien, aber auch andere Werkstücke, mittels des Laserstrahls bearbeitet werden. Insbesondere ist eine Materialmodifikation nahe der Oberfläche, eine Funktionalisierung, eine Modifikation im Volumen, beispielsweise Rissbildung, Ausbildung von Farbzentren, Schreiben von optischen Eigenschaften, oder eine Modifikation zwischen zwei Materialien, beispielsweise Schweißen, möglich. Auch ist eine additive Bearbeitung möglich, insbesondere für Polymere, Fotolacke oder dergleichen. Auch eine Bearbeitung von Halbleitern, Polymeren, Polymerfolien, Glas, sowie Keramiken ist möglich, wobei bevorzugt Ultrakurzpulslaser zur Anwendung kommen.

Der Laserstrahl wird durch die Laserstrahlquelle bevorzugt so erzeugt, dass er eine Gauß-Grundmode mit wohldefinierter linearer Polarisation aufweist. Insbesondere kann der Laserstrahl gepulst sein und Pulslängen von weniger als 50 ps, vorzugsweise mehr als 50 fs, aufweisen. Möglich sind aber auch Nanosekundenpulse, auch können Pulszüge, insbesondere sogenannte Bursts, auch Gigahertz-Bursts, erzeugt werden. Es ist aber auch möglich, Pulse mit Pulsdauern auf der Mikrosekunden-Zeitskala zu erzeugen. Die Wellenlänge des Laserstrahls kann insbesondere zwischen 300 nm und 1600 nm, vorzugsweise zwischen 450 nm und 1600 nm, liegen, insbesondere kommen 515 nm oder 1030 nm infrage. Die Wellenlänge kann aber auch unterhalb oder oberhalb des hier genannten Bereichs liegen.

Die Bearbeitungsoptik kann insbesondere eingerichtet sein, um den Laserstrahl zu fokussieren, umzulenken, zu verkleinern, zu vergrößern, allgemein die Größe eines Strahldurchmessers oder einer Strahlbreite, allgemein die Größe einer Querschnittsebene des Laserstrahls auf einer Bearbeitungsebene des Werkstücks, anzupassen. Insbesondere ist es möglich, dass die Bearbeitungsoptik ein Teleskop aufweist. Die Bearbeitungsoptik kann auch wenigstens ein diffraktives optisches Element aufweisen, insbesondere um den Laserstrahl auf mehrere Teilstrahlen aufzuteilen, beispielsweise um eine Mehrzahl von Bearbeitungsstellen simultan zu bearbeiten, oder um einen zeitlichen Versatz der auf das Werkstück gerichteten Laserstrahlen - über verschiedene Laufwege der verschiedenen Teilstrahlen - zu erreichen.

Vorzugsweise weist die Bearbeitungsoptik eine hohe numerische Apertur, insbesondere größer als 0,2, und/oder eine Brennweite von kleiner oder gleich 20 mm auf. Vorzugsweise ist die Bearbeitungsoptik als Festoptik ausgebildet. Es ist auch möglich, dass die Bearbeitungsoptik einen Scanner, insbesondere Galvanometerscanner, insbesondere mit geringerer numerischer Apertur und/oder längerer Brennweite, insbesondere mit einer Brennweite von mehr als 50 mm, aufweist.

Gemäß einer bevorzugten Ausgestaltung weist die Bearbeitungsoptik eine λ/4-Platte auf, um die Laserstrahlung vor dem Auftreffen auf die Bearbeitungsebene zirkular oder elliptisch zu polarisieren. Dies hat insbesondere Vorteile mit Blick auf die Bearbeitung des Werkstücks. Auch komplexere Polarisationszustände sind vorzugsweise möglich. Beispielsweise kann die Bearbeitungsoptik auch eine s-Wellenplatte oder ein anderes geeignetes Element aufweisen, um insbesondere vektoriell polarisierte Strahlung, insbesondere radial polarisierte oder azimutal polarisierte Strahlung, zu erzeugen.

Vorzugsweise ist die Bearbeitungsoptik so ausgestaltet, dass das elektrische Feld des Laserstrahls in der Ebene des zweiten Anzeigebereichs - oder des dritten Anzeigebereichs, oder allgemein eines letzten Anzeigebereichs der Mehrzahl von Anzeigebereiche - in Amplitude und Phase - gegebenenfalls bis auf eine Vergrößerung, Verkleinerung oder Polarisationsänderung - exakt dem elektrischen Feld auf der Bearbeitungsebene entspricht. Besonders bevorzugt ist die Bearbeitungsoptik als 4f-Teleskop ausgebildet. Insbesondere wird bevorzugt der zweite Anzeigebereich - oder der dritte Anzeigebereich, oder allgemein ein letzter Anzeigebereich der Mehrzahl von Anzeigebereiche - durch die Bearbeitungsoptik auf die Bearbeitungsebene abgebildet.

Die Bearbeitungsebene ist dabei zugleich bevorzugt die zuvor bereits erwähnte Zielebene.

Die Aufgabe wird auch gelöst, indem ein Verfahren zum Formen eines Laserstrahls geschaffen wird, wobei der Laserstrahl zunächst mit einem ersten Anzeigebereich eines ansteuerbaren räumlichen Lichtmodulators in Wechselwirkung gebracht wird, wobei der Laserstrahl danach mit einem zweiten Anzeigebereich des ansteuerbaren räumlichen Lichtmodulators in Wechselwirkung gebracht wird, wobei durch Ansteuern des Lichtmodulators in dem ersten Anzeigebereich eine erste Strahlbeeinflussungsstruktur und in dem zweiten Anzeigebereich eine zweite - insbesondere andere, insbesondere von der ersten Strahlbeeinflussungsstruktur verschiedene - Strahlbeeinflussungsstruktur erzeugt wird. Mittels des Verfahrens ist eine kompakte, bauraumsparende und flexible Formung des Laserstrahls möglich.

Bevorzugt wird im Rahmen des Verfahrens eine erfindungsgemäße Anordnung oder eine Anordnung nach einem der zuvor beschriebenen Ausführungsbeispiele verwendet. In Hinblick auf das Verfahren ergeben sich insoweit besonders bevorzugt diejenigen Vorteile, die bereits in Zusammenhang mit der Anordnung erläutert wurden.

Der Lichtmodulator wird bevorzugt in Echtzeit, insbesondere zur Laufzeit des Verfahrens, angesteuert. Vorzugsweise wird der Lichtmodulator elektronisch angesteuert. Vorzugsweise wird der Lichtmodulator digital angesteuert.

Dass in den Anzeigebereichen Strahlbeeinflussungsstrukturen erzeugt werden, bedeutet insbesondere, dass in den Anzeigebereichen Strahlbeeinflussungsstrukturen dargestellt werden.

In bevorzugter Ausgestaltung wird durch die Strahlbeeinflussungsstruktur des ersten Anzeigebereichs ein Flat-Top-Laserstrahl (Laserstrahl mit Flat-Top-Profil, kurz: Flat-Top) erzeugt. Während dies Vorteile für die Bearbeitung von Werkstücken besitzt, weist ein solcher Laserstrahl typischerweise einen begrenzt nutzbaren Schärfentiefebereich auf. Dies resultiert insbesondere daraus, dass eine Phasenverteilung des Laserstrahls in einer Querschnittsebene desselben, insbesondere in einer Fokusebene, nicht homogen ist; vielmehr ist die Wellenfront oder Phasenfront des Laserstrahls gekrümmt. Alternativ kann durch die Strahlbeeinflussungsstruktur des ersten Anzeigebereichs aber auch ein Laserstrahl mit maßgeschneiderter Intensitätsverteilung, beispielsweise mit linearem Intensitätsanstieg, oder anderweitig inhomogener Intensitätsverteilung, erzeugt werden. Demgegenüber weist ein Flat-Top-Laserstrahl eine homogene Intensitätsverteilung auf.

Gemäß einer Weiterbildung der Erfindung wird in einem ersten Funktionszustand sowohl in dem ersten Anzeigebereich als auch in dem zweiten Anzeigebereich als Strahlbeeinflussungsstruktur jeweils eine Phasenbeeinflussungsstruktur erzeugt, wobei vorzugsweise durch die Phasenbeeinflussungsstruktur in dem ersten Anzeigebereich, auch als erste Phasenbeeinflussungsstruktur bezeichnet, eine erste Amplitudenverteilung des Laserstrahls nach einer ersten Propagationsstrecke - hinter dem ersten Anzeigebereich - beeinflusst wird. Insbesondere wird auf diese Weise nach der ersten Propagationsstrecke der bereits erwähnte Flat-Top-Laserstrahl mit homogener Intensitätsverteilung oder ein Laserstrahl mit gezielt inhomogener Intensitätsverteilung erzeugt. Bevorzugt werden zusätzlich Aberrationen des Laserstrahls ausgeheilt, sodass letztlich ein Laserstrahl mit hoher Qualität erzeugt wird.

Die erste Propagationsstrecke entspricht dabei bevorzugt dem optischen Abstand zwischen dem ersten Anzeigebereich und dem zweiten Anzeigebereich, sodass die Amplitudenverteilung, insbesondere die Flat-Top-Verteilung, auf dem zweiten Anzeigebereich erzeugt wird.

Durch die Phasenbeeinflussungsstruktur in dem zweiten Anzeigebereich, auch als zweite Phasenbeeinflussungsstruktur bezeichnet, wird gemäß einer Ausgestaltung eine Phasenverteilung in einer Querschnittsebene des Laserstrahls vergleichmäßigt. Insbesondere kann auf diese Weise die Phasenfront des Laserstrahls geglättet und die vorhandene Phasenwölbung ausgeheilt werden. Dadurch wird das Propagationsverhalten des Laserstrahls angepasst, sodass dieser weniger divergent ist und einen größeren Schärfentiefenbereich aufweist. Es ist auch möglich, dass die Phasenverteilung gezielt so beeinflusst wird, dass der Schärfentiefenbereich an einen gewünschten Bearbeitungsprozess angepasst wird. Insbesondere kann das Propagationsverhalten des Laserstrahls flexibel durch die Wahl der zweiten Phasenbeeinflussungsstruktur angepasst werden. Insbesondere kann ein Konvergenz- und/oder Divergenzverhalten (Konvergenz- und/oder Divergenzwinkel) des Laserstrahls durch die Wahl der zweiten Phasenbeeinflussungsstruktur gezielt angepasst werden.

In bevorzugter Ausgestaltung wird auf der Grundlage der bekannten ersten Phasenbeeinflussungsstruktur die Phasenverteilung des Laserstrahls auf dem zweiten Anzeigebereich berechnet, insbesondere simuliert, und dann die zweite Phasenbeeinflussungsstruktur derart gewählt, dass die Phasenverteilung in gewünschter Weise durch den zweiten Anzeigebereich beeinflusst wird. Insbesondere ist es möglich, dass die berechnete Phasenverteilung numerisch invertiert und von dem Lichtmodulator in dem zweiten Anzeigebereich invertiert dargestellt wird. Bevorzugt resultiert in der Ebene des zweiten Anzeigebereichs eine plane Phasenverteilung sowie eine Flat-Top-Intensitätsverteilung.

Alternativ oder zusätzlich wird durch die zweite Phasenbeeinflussungsstruktur eine zweite Amplitudenverteilung nach einer zweiten Propagationsstrecke - hinter dem zweiten Anzeigebereich - beeinflusst. Auf diese Weise können insbesondere mehrere Ziele alternativ oder simultan verfolgt werden:
Zum einen ist es möglich, eine räumliche Winkelverteilung des Laserstrahls gezielt zu beeinflussen und so den Strahl in gewünschter Weise zu formen. In bevorzugter Ausgestaltung wird hierzu auf dem zweiten Anzeigebereich ein räumlicher Frequenzträger, insbesondere ein Gitter mit wohldefiniertem k-Vektor, dargestellt, wobei gezielt bestimmte unerwünschte Strahlanteile des Laserstrahls aus dem Strahlpfad weggebeugt, oder nur bestimmte, gewünschte Strahlanteile des Laserstrahls in den weiteren Strahlpfad hineingebeugt werden können. Insbesondere ist es dann möglich, nach einer bestimmten Propagationsstrecke unerwünschte Strahlanteile von gewünschten Strahlanteilen, die auch als Nutzstrahl bezeichnet werden, räumlich abzutrennen, insbesondere mittels wenigstens einer Blende. In besonders bevorzugter Ausgestaltung ist auf diese Weise eine Schärfung der Außenkontur des Flat-Top-Laserstrahls möglich, wobei diese der Beugungsgrenze angenähert werden kann. Es können aber auch beliebige Formen/Geometrien des Laserstrahls dargestellt werden.

Zum anderen ist es möglich, gezielt die Homogenität des Laserstrahls zu beeinflussen, insbesondere zu steigern, oder aber auch gezielt abzuschwächen, beispielsweise gezielt Inhomogenitäten in den Laserstrahl einzubringen. Insbesondere kann mithilfe des zuvor beschriebenen Regelkreises, der die Diagnoseeinrichtung und die Ansteuereinrichtung umfasst, die Homogenität des Laserstrahls angepasst werden, indem beispielsweise eine Modulationstiefe des in dem zweiten Anzeigebereich dargestellten Phasengitters lokal gezielt beeinflusst wird. Es sind auch Intensitätsverläufe, Intensitätssprünge oder allgemein beliebige Intensitätsverteilungen erzeugbar. Insbesondere kann die zweite Amplitudenverteilung gezielt lokal beeinflusst und damit verändert werden.

Gemäß einer Weiterbildung der Erfindung ist vorgesehen, dass in einem zweiten Funktionszustand in dem ersten Anzeigebereich als erste Strahlbeeinflussungsstruktur eine Phasenbeeinflussungsstruktur erzeugt wird, durch die die Amplitudenverteilung des Laserstrahls - insbesondere nach der ersten Propagationsstrecke - beeinflusst wird, insbesondere die Amplitudenverteilung des Laserstrahls auf dem zweiten Anzeigebereich. Eine Polarisation des Laserstrahls zwischen dem ersten Anzeigebereich und dem zweiten Anzeigebereich wird verändert, wobei in dem zweiten Anzeigebereich als zweite Strahlbeeinflussungsstruktur eine Polarisationsbeeinflussungsstruktur erzeugt wird, durch welche die Polarisation des Laserstrahls lokal beeinflusst wird. Hierzu wird in bevorzugter Ausgestaltung die zuvor erläuterte Strahlformoptik auf die zuvor erläuterte Weise eingesetzt, woraus sich wiederum insbesondere die zuvor erläuterten Vorteile ergeben.

Der Laserstrahl wird bevorzugt mit definierter linearer Polarisation, insbesondere mit zu einer ersten Kristallachse von doppelbrechenden Kristallen des Lichtmodulators parallelem Polarisationsvektor auf den ersten Anzeigebereich eingestrahlt, wobei der Polarisationsvektor des Laserstrahls zwischen dem ersten Anzeigebereich und dem zweiten Anzeigebereich gedreht wird, insbesondere so, dass er mit 45° zu der ersten Kristallachse der Kristalle des Lichtmodulators auf den zweiten Anzeigebereich trifft. In dem zweiten Anzeigebereich wird durch die Polarisationsbeeinflussungsstruktur dann bevorzugt die Polarisation des Laserstrahls in dessen Querschnittsebene lokal verändert, insbesondere gedreht, insbesondere pixelweise gedreht.

Vorzugsweise werden hinter dem zweiten Anzeigebereich Strahlanteile des Laserstrahls mit bestimmter Polarisation gefiltert, insbesondere Strahlanteile mit bestimmter Polarisation zumindest teilweise oder vollständig aus dem Strahlpfad entfernt, oder nur Strahlanteile mit bestimmter Polarisation in dem Strahlpfad belassen. Insbesondere werden Strahlanteile des Laserstrahls mit bestimmter Polarisation als Nutzstrahl ausgewählt.

In bereits in Zusammenhang mit der Strahlformoptik beschriebener Weise kann so eine Strahlformung des Laserstrahls bewirkt werden.

Insbesondere kann auf diese Weise gezielt eine bestimmte, zweidimensionale Intensitätsverteilung generiert werden, die beispielsweise zur Mikrostrukturierung eines Werkstücks eingesetzt werden kann. Dabei ist es möglich, hohe Pulsenergien einer Laserquelle für eine erhöhte Produktivität nutzbar zu machen, indem gezielt bestimmte räumliche Intensitätsverteilungen generiert werden. Weiterhin erweisen sich maßgeschneiderte räumliche Intensitätsverteilungen für verschiedene Bearbeitungsprozesse als vorteilhaft. Mit dem hier vorgeschlagenen Verfahren lassen sich Phase und Amplitude des Laserstrahls räumlich maßschneidern. Der zweite Anzeigebereich kann zusätzlich genutzt werden, um Aberrationen zu korrigieren. Auch der erste Anzeigebereich kann allerdings zusätzlich oder alternativ zur Korrektur von Aberrationen eingesetzt werden. Mittels der Polarisationsfilterung/Polarisationstrennung kann die Amplitudenverteilung des Laserstrahls in der Zielebene direkt geformt werden.

Es ist vorteilhaft, wenn der zweite Anzeigebereich - oder der dritte Anzeigebereich, oder ein letzter Anzeigebereich - mittels der Bearbeitungsoptik auf die Zielebene oder Bearbeitungsebene verkleinert wird, da dann die Auflösung des Lichtmodulators besser ausgenutzt werden kann. Insbesondere ergibt sich eine verbesserte Auflösung der Intensitätsverteilung des Laserstrahls auf der Bearbeitungsebene oder Zielebene.

Die Beeinflussung der Polarisation des Laserstrahls durch die Polarisationsbeeinflussungsstruktur in Kombination mit der anschließenden Polarisationsfilterung kann auch genutzt werden, um die Kontur des Laserstrahls zu schärfen.

Hierzu wird bevorzug die Polarisation mittels der Polarisationsbeeinflussungsstruktur lokal, insbesondere pixelweise, so gedreht, dass es zu maximaler Transmission sowie maximaler Reflexion der entsprechenden Strahlanteile an dem Dünnschichtpolarisator kommt.

Es können beliebige Masken zur Amplitudenformung durch den Lichtmodulator dargestellt werden. Insbesondere kann ein optischer Stempel erzeugt werden.

Gemäß einer bevorzugten Ausgestaltung wird mittels der Diagnoseeinrichtung direkt die durch den Dünnschichtpolarisator als Nutzstrahl ausgewählte, vorzugsweise transmittierte Intensität beobachtet, wobei einzelne Pixel des Lichtmodulators kalibriert werden und etwaige Drifts oder Fehler aufgrund thermischer Effekte, Alterung, oder ähnlichem, korrigiert werden können.

Durch gezieltes Drehen der lokalen Polarisation einzelner Pixel des Lichtmodulators können Intensitätsgradienten generiert werden, und/oder es können Inhomogenitäten in der Strahlform des Laserstrahls kompensiert werden.

Bevorzugt wird der Laserstrahl in dem Anzeigebereich, welcher dem die Polarisationsbeeinflussungsstruktur darstellenden Anzeigebereich vorgelagert ist, insbesondere in dem ersten Anzeigebereich, vorgeformt, das heißt in Richtung einer Ziel-Intensitätsverteilung vorbeeinflusst, wodurch die Effizienz der gesamten Strahlformung deutlich verbessert wird. Soll beispielsweise ein Dreieck oder eine andere Form generiert werden, kann bereits in dem ersten Anzeigebereich statt eines rechteckigen Flat-Tops ein dreieckiger Flat-Top, oder eine andere entsprechende Geometrie des Laserstrahls erzeugt werden, sodass anschließend weniger Intensität durch die Polarisationstrennung verloren geht.

In bevorzugter Ausgestaltung wird somit in dem ersten Anzeigebereich eine Amplitudenverteilung erzeugt, die einer durch die Polarisationsbeeinflussungsstruktur in Zusammenhang mit der Polarisationstrenneinrichtung zu erzeugenden Intensitätsverteilung angenähert ist.

Räumliche Lichtmodulatoren haben - wie bereits erwähnt - die Eigenschaft, grundsätzlich auch unbeeinflusste Hintergrundstrahlung zu transmittieren oder zu reflektieren, was auch als nullte Ordnung bezeichnet wird. Diese Hintergrundstrahlung muss nicht eigens gefiltert werden, sondern kann vielmehr im Wege der Polarisationsfilterung/Polarisationstrennung mit entfernt werden. Dies wiederum ermöglicht es vorteilhaft, insbesondere in dem ersten Anzeigebereich niederfrequente Phasenmasken zu nutzen, was aufgrund der begrenzten Auflösung des Lichtmodulators Vorteile mit sich bringt. Selbstverständlich ist aber auch eine Filterung der nullten Ordnung möglich, insbesondere mittels der oben beschriebenen 6f-Anordnung.

Gemäß einer Weiterbildung der Erfindung ist vorgesehen, dass zwischen dem ersten Funktionszustand und dem zweiten Funktionszustand umgeschaltet wird. Auf diese Weise kann bedarfsgerecht, insbesondere abhängig von einer Bearbeitungsaufgabe zur Bearbeitung eines Werkstücks, zwischen den verschiedenen Funktionszuständen und damit den verschiedenen Arten der Beeinflussung des Laserstrahls gewechselt werden.

Gemäß einer Weiterbildung der Erfindung ist vorgesehen, dass der Laserstrahl hinter dem zweiten Anzeigebereich mit einem dritten Anzeigebereich des ansteuerbaren räumlichen Lichtmodulators in Wechselwirkung gebracht wird. Dabei wird durch Ansteuerung des Lichtmodulators in dem dritten Anzeigebereich eine dritte Strahlbeeinflussungsstruktur erzeugt. Diese dritte Strahlbeeinflussungsstruktur ist bevorzugt von der ersten Strahlbeeinflussungsstruktur und von der zweiten Strahlbeeinflussungsstruktur verschieden. Sowohl in dem ersten Anzeigebereich als auch in dem zweiten Anzeigebereich wird jeweils als Strahlbeeinflussungsstruktur eine Phasenbeeinflussungsstruktur erzeugt. Vorzugsweise wird durch die erste Phasenbeeinflussungsstruktur in dem ersten Anzeigebereich eine erste Amplitudenverteilung des Laserstrahls nach einer ersten Propagationsstrecke beeinflusst, und durch die zweite Phasenbeeinflussungsstruktur in dem zweiten Anzeigebereich eine Phasenverteilung in einer Querschnittsebene des Laserstrahls vergleichmäßigt und/oder eine zweite Amplitudenverteilung nach einer zweiten Propagationsstrecke beeinflusst. Eine Polarisation des Laserstrahls wird zwischen dem zweiten Anzeigebereich und dem dritten Anzeigebereich verändert, wobei in dem dritten Anzeigebereich als dritte Strahlbeeinflussungsstruktur eine Polarisationsbeeinflussungsstruktur erzeugt wird, durch welche die Polarisation des Laserstrahls lokal beeinflusst wird. Dabei werden vorzugsweise hinter dem dritten Anzeigebereich Strahlanteile des Laserstrahls mit bestimmter Polarisation gefiltert. Auf diese Weise werden vorteilhaft die zuvor beschriebenen Funktionszustände miteinander kombiniert und quasi in Kombination miteinander hintereinander verwirklicht. Damit lässt sich der Laserstrahl in besonders flexibler Weise formen und insbesondere zugleich - insbesondere bis zur Beugungsgrenze - schärfen. Insbesondere können die ersten beiden Anzeigebereiche genutzt werden, um eine gewünschte, möglichst scharfe Intensitätsverteilung zu erzeugen, beispielsweise einen Flat-Top-Laserstrahl, wobei der dritte Anzeigebereich insbesondere in Zusammenhang mit der Polarisationstrennung genutzt werden kann, um die endgültige Form des Laserstrahls zu definieren.

Insgesamt können mithilfe des Verfahrens aufgrund des hochflexiblen Strahlformungsprozesses Laserstrahlen mit sehr hoher Qualität in der Intensitätsverteilung, insbesondere bezüglich Außenkontur und Homogenität, erzeugt werden.

Gemäß einer Weiterbildung der Erfindung ist vorgesehen, dass wenigstens eine Eigenschaft eines von wenigstens einem als beobachteter Anzeigebereich bezeichneten Anzeigebereich der Mehrzahl von Anzeigebereichen kommenden Teststrahls ermittelt wird, wobei die Strahlbeeinflussungsstruktur des wenigstens einen beobachteten Anzeigebereichs in Abhängigkeit von der wenigstens einen ermittelten Eigenschaft verändert wird. Der Teststrahl wird bevorzugt aus dem Strahlpfad ausgekoppelt. Dies wird bevorzugt durchgeführt, wie dies zuvor in Zusammenhang mit der Diagnoseeinrichtung erläutert wurde, insbesondere mithilfe der Auskoppeloptik, der Diagnoseeinrichtung und/oder der Ansteuereinrichtung. Dabei werden weiterhin die bereits zuvor erläuterten Vorteile verwirklicht, insbesondere kann in besonders vorteilhafter Weise ein geschlossener Regelkreis für die Strahlformung verwirklicht werden.

Es ist auch möglich, dass mehrere Anzeigebereiche, insbesondere der erste Anzeigebereich und der zweite Anzeigebereich, oder der zweite Anzeigebereich und der dritte Anzeigebereich, oder der erste Anzeigebereich und der dritte Anzeigebereich, oder der erste Anzeigebereich, der zweite Anzeigebereich und der dritte Anzeigebereich, entsprechend beobachtet werden, entweder zeitlich nacheinander, insbesondere durch Refokussieren oder anderweitiges Umstellung der Auskoppeloptik, oder zeitgleich, insbesondere durch Vorsehen einer Mehrzahl von Auskoppeloptiken, oder durch simultanes Beleuchten einer Mehrzahl von Anzeigebereichen, insbesondere aller Anzeigebereiche, mit einem Teststrahl und simultanes Auswerten des Teststrahls, wie oben beschrieben.

Als Teststrahl wird bevorzugt ein zusätzlich zu dem Laserstrahl vorgesehener, von diesem verschiedener Lichtstrahl verwendet, der vorzugsweise eine andere Wellenlänge aufweist als der Laserstrahl; oder es wird als Teststrahl ein Teilstrahl des Laserstrahls aus dem Strahlpfad ausgekoppelt.

Es ist aber auch möglich, dass der Laserstrahl selbst als Teststrahl verwendet wird.

Gemäß einem weiteren Aspekt der Erfindung wird in Kombination zu wenigstens einem der zuvor erläuterten Verfahrensschritte - ein Verfahren zur Kalibration des Lichtmodulators geschaffen, wobei der Lichtmodulator kalibriert wird, indem eine Ansteuerung des Lichtmodulators über ein Ansteuerintervall durchgestimmt wird, wobei für mindestens zwei Ansteuerbereiche des Lichtmodulators eine dem jeweiligen Ansteuerbereich zugeordnete Intensität eines mit dem Lichtmodulator wechselwirkenden Teststrahls in Abhängigkeit von der Ansteuerung des Lichtmodulators mittels einer optischen Aufnahmeeinrichtung der Diagnoseeinrichtung erfasst wird, wobei die jeweiligen Intensitäten bei gleicher Ansteuerung miteinander verglichen werden, und wobei eine Korrektur der Ansteuerung für die mindestens zwei Ansteuerbereiche auf der Grundlage des Vergleichs ermittelt wird. Insbesondere wird bevorzugt eine Korrekturmaske erstellt. Diese kann vorzugsweise - insbesondere in Echtzeit oder in gespeicherter Form - an die Ansteuereinrichtung der Anordnung übertragen werden, um den Lichtmodulator kalibriert anzusteuern.

Das Kalibrationsverfahren wird bevorzugt so durchgeführt, wie dies zuvor bereits im Zusammenhang mit der entsprechend eingerichteten Diagnoseeinrichtung erläutert wurde.

Vorzugsweise weist die Diagnoseeinrichtung zwischen dem Lichtmodulator und der Aufnahmeeinrichtung eine Polarisationstrenneinrichtung auf, die eingerichtet ist, um eine Polarisationsfilterung verschieden polarisierter Strahlenanteile des Teststrahls durchzuführen, wobei, wenn eine insbesondere lineare Polarisation des Teststrahls auf dem Lichtmodulator - insbesondere relativ zu dem Lichtmodulator - so ausgerichtet ist, dass der Lichtmodulator den Polarisationszustand des Teststrahls abhängig von seiner Ansteuerung verändert, eine Phasenverschiebung zwischen in Abhängigkeit von der Ansteuerung erfassten Intensitätsverläufen der mindestens zwei Ansteuerbereiche bestimmt wird, wobei die Korrektur in Abhängigkeit von der Phasenverschiebung ermittelt wird.

Gemäß einer Weiterbildung der Erfindung ist vorgesehen, dass die Korrektur der Ansteuerung von einer Mehrzahl von Ansteuerbereichen in Abhängigkeit von einem Strahlparameter und/oder einer Strahlwirkung des Teststrahls auf dem Lichtmodulator - vorzugsweise lokal oder global - ermittelt wird, wobei der Strahlparameter bevorzugt ausgewählt ist aus einer Gruppe, bestehend aus: Einer Fluenz, einer Intensität, und einer mittleren Leistung; die Strahlwirkung ist bevorzugt eine Temperatur. Dies kann insbesondere zusätzlich oder alternativ zu der oben beschriebenen Ermittlung der Korrektur für die verschiedenen Ansteuerbereiche in Abhängigkeit von der Ansteuerung derselben durchgeführt werden.

Gemäß einer Weiterbildung der Erfindung ist vorgesehen, dass mit dem Laserstrahl hinter dem Lichtmodulator ein Werkstück bestrahlt wird. Dies geschieht in bevorzugter Weise mittels der Bearbeitungsoptik, insbesondere auf die Weise, die bereits in Zusammenhang mit der Bearbeitungsoptik erläutert wurde. Insoweit ergeben sich auch die bereits zuvor erläuterten Vorteile.

Die Erfindung wird im Folgenden anhand der Zeichnung näher erläutert. Dabei zeigen:
- Figur 1: eine schematische Darstellung eines ersten Ausführungsbeispiels einer Anordnung zum Formen eines Laserstrahls;
- Figur 2: eine schematische Darstellung eines zweiten Ausführungsbeispiels einer Anordnung zum Formen eines Laserstrahls, und
- Figur 3: eine schematische Darstellung eines Details eines dritten Ausführungsbeispiels einer Anordnung zum Formen eines Laserstrahls.

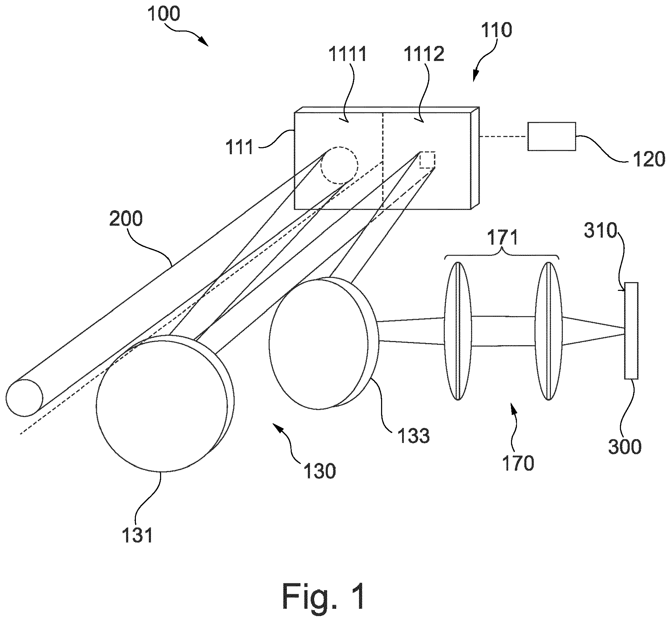

**Fig. 1** zeigt eine schematische Darstellung eines ersten Ausführungsbeispiels einer Anordnung 100 zum Formen eines Laserstrahls 200, die einen ansteuerbaren räumlichen Lichtmodulator 110 aufweist, sowie eine Ansteuereinrichtung 120, die eingerichtet ist zur Ansteuerung des Lichtmodulators 110. Die Ansteuereinrichtung 120 ist insbesondere mit dem Lichtmodulator 110 zu dessen Ansteuerung wirkverbunden. In bevorzugter Ausgestaltung ist der Lichtmodulator 110 als Flüssigkristalldisplay ausgebildet. Die Ansteuereinrichtung 120 ist insbesondere eingerichtet zur elektronischen, insbesondere digitalen Ansteuerung des Lichtmodulators 110. Insbesondere ist die Ansteuereinrichtung 120 frei programmierbar.

Die Anordnung 100 weist außerdem eine Strahlführungsoptik 130 auf.

Die Ansteuereinrichtung 120 ist eingerichtet, um eine Anzeigeebene 111 des Lichtmodulators 110 in eine Mehrzahl von Anzeigebereichen zu teilen und in wenigstens einem ersten Anzeigebereich 1111 der Mehrzahl von Anzeigebereichen eine erste Strahlbeeinflussungsstruktur und in einem zweiten Anzeigebereich 1112 der Mehrzahl von Anzeigebereichen 1111, 1112 eine zweite Strahlbeeinflussungsstruktur darzustellen. Die Strahlführungsoptik 130 ist eingerichtet, um den Laserstrahl 200 entlang seiner Propagationsrichtung zunächst mit dem ersten Anzeigebereich 1111 und danach mit dem zweiten Anzeigebereich 1112 in Wechselwirkung zu bringen.

Dabei weist die Strahlführungsoptik 130 bei dem hier dargestellten Ausführungsbeispiel einen ersten Spiegel 131 auf, der angeordnet ist, um den von dem ersten Anzeigebereich 1111 kommenden Laserstrahl 200 zu dem zweiten Anzeigebereich 1112 zu lenken. Es ist möglich, dass zusätzlich eine abbildende optische Anordnung mit wenigstens einem abbildenden optischen Element zwischen dem ersten Anzeigebereich 1111 und dem zweiten Anzeigebereich 1112 im Strahlpfad des Laserstrahls 200 vorgesehen ist, beispielsweise eine Linse. Auch ist es möglich, dass der Spiegel 131 als abbildendes optisches Element ausgestaltet ist. Dabei sind der erste Anzeigebereich 1111 und der zweite Anzeigebereich 1112 bevorzugt jeweils in einer Fokusebene des abbildenden optischen Elements oder der abbildenden optischen Anordnung angeordnet, sodass eine 2f-Anordnung verwirklicht wird. Alternativ ist es möglich, dass der erste Anzeigebereich 1111 abbildende Eigenschaften aufweist, wobei bevorzugt der zweite Anzeigebereich 1112 in einer Fokusebene des ersten Anzeigebereichs 1111 angeordnet ist, wobei auf diese Weise eine 1f-Anordnung verwirklicht wird. Es ist aber auch möglich, dass ein höheres Vielfaches einer 2f-Anordnung, insbesondere unter Erzeugung einer Fourierebene als letzter Brennebene, verwirklicht wird. Insbesondere ist es in bevorzugter Ausgestaltung möglich, eine 6f-Anordnung, vorzugsweise mit wenigstens einem Raumfilter, zu verwirklichen.

Die Strahlführungsoptik 130 weist hier außerdem einen zweiten Spiegel 133 auf, der den Laserstrahl 200 hinter dem zweiten Anzeigebereich 1112 umlenkt.

Im Rahmen eines bevorzugten Verfahrens zum Formen des Laserstrahls 200 wird dieser zunächst mit dem ersten Anzeigebereich 1111 in Wechselwirkung gebracht, wobei er danach mit dem zweiten Anzeigebereich 1112 in Wechselwirkung gebracht wird. Durch Ansteuern des Lichtmodulators 110 wird in dem ersten Anzeigebereich 1111 eine erste Strahlbeeinflussungsstruktur und in dem zweiten Anzeigebereich 1112 eine zweite, insbesondere andere Strahlbeeinflussungsstruktur erzeugt.

Insbesondere bei dem hier dargestellten, ersten Ausführungsbeispiel der Anordnung 100 wird bevorzugt in einem ersten Funktionszustand der Anordnung 100 sowohl in dem ersten Anzeigebereich als auch in dem zweiten Anzeigebereich als Strahlbeeinflussungsstruktur jeweils eine Phasenbeeinflussungsstruktur erzeugt, wobei durch die erste Phasenbeeinflussungsstruktur in dem ersten Anzeigebereich bevorzugt eine erste Amplitudenverteilung des Laserstrahls nach einer ersten Propagationsstrecke, insbesondere in der Ebene des zweiten Anzeigebereichs 1112, beeinflusst wird. Durch die zweite Phasenbeeinflussungsstruktur in dem zweiten Anzeigebereich 1112 wird eine Phasenverteilung in einer Querschnittsebene des Laserstrahls 200 vergleichmäßigt. Alternativ oder zusätzlich wird durch die Phasenbeeinflussungsstruktur in dem zweiten Anzeigebereich 1112 eine zweite Amplitudenverteilung nach einer zweiten Propagationsstrecke, insbesondere auf einer Zielebene oder Bearbeitungsebene 310 beeinflusst.

Insbesondere ist es möglich, dass mittels der ersten Phasenbeeinflussungsstruktur eine Flat-Top-Intensitätsverteilung des Laserstrahls 200 auf dem zweiten Anzeigebereich 1112 erzeugt wird, wobei durch die zweite Phasenbeeinflussungsstruktur eine Phasenwölbung des Flat-Tops geglättet und damit die Wellenfront des Laserstrahls 200 geebnet, und/oder ein bestimmtes Propagationsverhalten oder eine bestimmte Schärfentiefe des Laserstrahls 200 eingestellt, und/oder eine räumliche Winkelverteilung des Laserstrahls 200 beeinflusst, und/oder eine Homogenität oder Inhomogenität des Laserstrahls 200 gezielt beeinflusst, und/oder eine Außenkontur des Laserstrahls 200 beeinflusst, besonders bevorzugt geschärft wird.

Die Anordnung 100 weist bevorzugt eine Bearbeitungsoptik 170 auf, die angeordnet und eingerichtet ist, um den von dem Lichtmodulator 110 kommenden Laserstrahl 200 auf ein Werkstück 300, insbesondere auf die Bearbeitungsebene 310 des Werkstücks 300, die zugleich auch als Zielebene bezeichnet wird, zu leiten. In bevorzugter Ausgestaltung ist die Bearbeitungsoptik 170 als Teleskop 171 ausgebildet, besonders bevorzugt als 4f-Teleskop, durch welches der zweite Anzeigebereich 1112 derart auf die Bearbeitungsebene 310 abgebildet wird, dass das elektrische Feld des Laserstrahls 200 in der Ebene des zweiten Anzeigebereichs 1112 sowohl in Phase als auch Amplitude genau dem elektrischen Feld in der Bearbeitungsebene 310 entspricht, gegebenenfalls bis auf eine Vergrößerung, Verkleinerung und/oder Polarisationsänderung.

Somit wird im Rahmen des Verfahrens mit dem Laserstrahl 200 hinter dem Lichtmodulator 110 das Werkstück 300 bestrahlt.

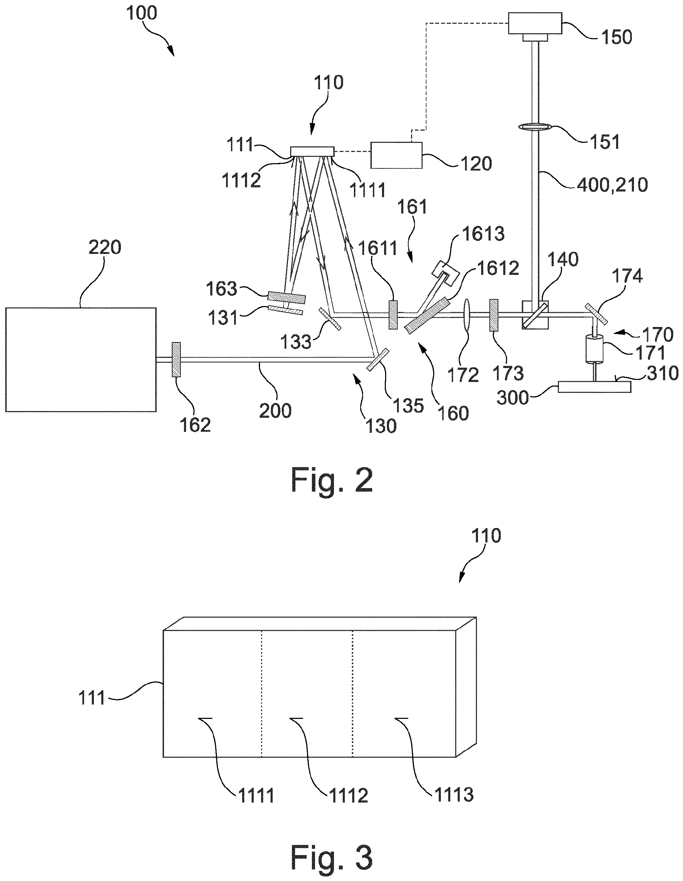

Fig. 2 zeigt eine schematische Darstellung eines zweiten Ausführungsbeispiels der Anordnung 100. Gleiche und funktionsgleiche Elemente sind in allen Figuren mit den gleichen Bezugszeichen versehen, sodass jeweils insoweit auf die vorangegangene Beschreibung verwiesen wird. In Figur 2 ist eine Laserstrahlquelle 220 dargestellt, von welcher der Laserstrahl 200 ausgeht und durch welche bevorzugt der Laserstrahl 200 erzeugt wird. Die Laserstrahlquelle 220 kann insbesondere als Ultrakurzpulslaser ausgebildet sein, der eingerichtet ist, um Laserpulse mit einer zeitlichen Pulsbreite in der Größenordnung von Pikosekunden bis Femtosekunden zu erzeugen, beispielsweise als MOPA-Faserlaser.

Bei dem zweiten Ausführungsbeispiel ist eine Auskoppeloptik 140 vorgesehen, die ohne weiteres auch bei dem ersten Ausführungsbeispiel vorgesehen sein kann, dort lediglich nicht explizit dargestellt ist. Die Auskoppeloptik 140 ist eingerichtet und angeordnet, um einen von einem Anzeigebereich 1111, 1112 der Mehrzahl von Anzeigebereichen 1111, 1112 kommenden Teststrahl 400 auf eine Diagnoseeinrichtung 150 zu lenken. Bei dem hier dargestellten Ausführungsbeispiel ist der Teststrahl 400 ein Teilstrahl 210 des Laserstrahls 200, wobei die Auskoppeloptik 140 als teildurchlässiger Spiegel ausgebildet ist, der bevorzugt eingerichtet ist, um zwischen 0,01 % und 10 %, vorzugsweise weniger als 1 %, vorzugsweise weniger als 0,01 %, der Leistung des Laserstrahls 200 aus dem Strahlpfad auszukoppeln und auf die Diagnoseeinrichtung 150 zu lenken.

Alternativ ist es möglich, dass als Teststrahl 400 ein zusätzlicher, von dem Laserstrahl 200 verschiedener Teststrahl verwendet wird, der beispielsweise durch eine Laserdiode oder LED emittiert werden kann. Vorzugsweise propagiert dieser zusätzliche Teststrahl 400 zumindest bereichsweise entlang desselben Strahlpfads wie der Laserstrahl 200, insbesondere zwischen dem Lichtmodulator 110 und der Auskoppeloptik 140. Dabei weist bevorzugt der zusätzliche Teststrahl 400 eine von dem Laserstrahl 200 verschiedene Wellenlänge auf. In diesem Fall ist die Auskoppeloptik 140 bevorzugt als dichroitischer Spiegel ausgebildet, der gezielt die Wellenlänge des Teststrahls 400 auskoppelt und den Laserstrahl 200 transmittiert.

Die Diagnoseeinrichtung 150 ist vorzugsweise als eine Kombination einer Aufnahmeeinrichtung mit einer Auswerteeinrichtung ausgebildet, insbesondere als Kamera in Kombination mit einer Recheneinrichtung, insbesondere als Kamera mit integrierter Recheneinrichtung.

Die Diagnoseeinrichtung 150 weist außerdem bevorzugt ein abbildendes optisches Element zur Abbildung eines beobachteten Anzeigebereichs 1111, 1112 auf eine Bildebene der Diagnoseeinrichtung 150 auf, hier insbesondere eine Auskoppellinse 151. Diese bildet hier bevorzugt den zu beobachtenden Anzeigebereich 1111, 1112 in Zusammenspiel mit einer im Folgenden noch erläuterten Bearbeitungslinse 172 auf die Bildebene der Diagnoseeinrichtung 150 ab. Insbesondere durch Anpassen der optischen Abbildungseigenschaften der Auskoppellinse 151 und/oder der Bearbeitungslinse 172, insbesondere durch Refokussierung, kann der zu beobachtende Abbildungsbereich 1111, 1112 ausgewählt werden.

Die Diagnoseeinrichtung 150 ist bevorzugt mit der Ansteuereinrichtung 120 wirkverbunden, um den Lichtmodulator 110 abhängig von wenigstens einer Eigenschaft des Teststrahls 400, insbesondere einer Intensitätsverteilung oder Amplitudenverteilung, einer Phasenverteilung, und/oder einer Polarisationsverteilung des Teststrahls 400, die durch die Diagnoseeinrichtung 150 im Wege der Auswertung ermittelt wird, anzusteuern. Auf diese Weise kann insbesondere ein geschlossener Regelkreis zur Regelung der wenigstens einen Eigenschaft des Teststrahls 400 und damit bevorzugt zugleich auch des Laserstrahls 200 verwirklicht werden.

Die Diagnoseeinrichtung 150 ist bevorzugt eingerichtet, um den Lichtmodulator 110 zu kalibrieren, indem die Ansteuerung des Lichtmodulators 110 über ein Ansteuerintervall durchgestimmt wird, wobei für mindestens zwei Ansteuerbereiche des Lichtmodulators 110 eine dem jeweiligen Ansteuerbereich zugeordnete Intensität des Teststrahls 400 in Abhängigkeit von der Ansteuerung des Lichtmodulators 110 mittels der Aufnahmeeinrichtung erfasst wird, wobei die jeweiligen Intensitäten bei gleicher Ansteuerung miteinander verglichen werden, und wobei eine Korrektur der Ansteuerung für die mindestens zwei Ansteuerbereiche auf der Grundlage des Vergleichs ermittelt wird.

Vorzugsweise ist die Diagnoseeinrichtung 150 eingerichtet, um, wenn eine insbesondere lineare Polarisation des Teststrahls 400 auf dem Lichtmodulator 110 - insbesondere relativ zu dem Lichtmodulator 110 - so ausgerichtet ist, dass der Lichtmodulator 110 der Polarisationszustand des Teststrahls 400 abhängig von seiner Ansteuerung verändert, eine Phasenverschiebung zwischen in Abhängigkeit von der Ansteuerung erfassten Intensitätsverläufen der mindestens zwei Ansteuerbereiche zu bestimmen, sowie um die Korrektur in Abhängigkeit von der Phasenverschiebung zu ermitteln.

Vorzugsweise ist die Diagnoseeinrichtung 150 eingerichtet, um die Korrektur der Ansteuerung für eine Mehrzahl von Ansteuerbereichen in Abhängigkeit von einem Strahlparameter und/oder einer Strahlwirkung des Teststrahls 400 auf dem Lichtmodulator 110 - vorzugsweise global oder lokal - zu ermitteln, wobei der Strahlparameter bevorzugt ausgewählt ist aus einer Gruppe, bestehend aus: Einer Fluenz, einer Intensität, und einer mittleren Leistung; die Strahlwirkung ist bevorzugt eine Temperatur.

Bei dem zweiten Ausführungsbeispiel weist die Anordnung 100 eine Strahlformoptik 160 auf, die angeordnet und eingerichtet ist, um eine Polarisation, insbesondere eine lineare Polarisation, des Laserstrahls 200 zwischen dem ersten Anzeigebereich 1111 und dem zweiten Anzeigebereich 1112 zu verändern, insbesondere zu drehen. Dabei weist die Strahlformoptik 160 hier eine erste λ/2-Platte 162 auf, die dem Laserstrahl 200 vor dem ersten Anzeigebereich 1111 eine definiert ausgerichtete, erste lineare Polarisation verleiht. Die Strahlformoptik weist außerdem eine erste λ/4-Platte 163 auf, die derart vor dem ersten Spiegel 131 angeordnet ist, dass sie von dem Laserstrahl 200 auf dessen Weg von dem ersten Anzeigebereich 1111 zu dem zweiten Anzeigebereich 1112 zweimal passiert wird. Mithilfe der ersten λ/4-Platte kann die erste lineare Polarisation gedreht werden zu einer zweiten linearen Polarisation, mit welcher der Laserstrahl auf den zweiten Anzeigebereich 1112 trifft. Dabei ist bevorzugt die erste lineare Polarisation parallel zu einer bestimmten Kristallachse der beiden Kristallachsen der bevorzugt doppelbrechenden Kristalle des Lichtmodulators 110 ausgerichtet, sodass die Polarisation des Laserstrahls 100 in dem ersten Anzeigebereich 1111 nicht verändert wird.

Durch die erste λ/4-Platte 163 wird die Polarisation des Laserstrahls 200 derart gedreht, dass die zweite lineare Polarisation nicht mehr parallel zu der bestimmten Kristallachse der Kristalle ausgerichtet ist, sodass nunmehr die Polarisation des Laserstrahls 200 in dem zweiten Anzeigebereich 1112 verändert, insbesondere lokal, insbesondere pixelweise, gedreht werden kann.

Bei dem hier dargestellten Ausführungsbeispiel weist die Strahlformoptik 160 hinter dem zweiten Anzeigebereich 1112 eine Polarisationstrenneinrichtung 161 auf, die angeordnet und eingerichtet ist, um verschieden polarisierte Strahlanteile des von dem zweiten Anzeigebereich 1112 kommenden Laserstrahl 200 zu filtern und/oder voneinander zu trennen. Somit kann insbesondere letztlich der Laserstrahl 200 mit hoher Schärfe beliebig geformt werden, es können aber auch Intensitätsverläufe dargestellt werden.

Die Polarisationstrenneinrichtung 161 weist einen Dünnschichtpolarisator 1612 auf, durch den Strahlanteile mit bestimmter Polarisation transmittiert und Strahlanteile mit bestimmter anderer Polarisation reflektiert werden. Die Polarisationstrenneinrichtung 161 weist außerdem eine Strahlfalle 1613 auf, in die unerwünschte Strahlanteile durch den Dünnschichtpolarisator 1612 geleitet und dort vernichtet werden. Weiter weist die Strahlformoptik 161 eine zweite λ/2-Platte 1611 auf, durch welche die durch den Lichtmodulator veränderte Polarisation auf den Dünnschichtpolarisator ausgerichtet werden kann. Zusätzlich oder alternativ kann mittels der bevorzugt verstellbaren λ/2-Platte eingestellt werden, in welchem Umfang unerwünschte Strahlanteile durch den Dünnschichtpolarisator 1612 abgelenkt werden.

Bei dem hier dargestellten Ausführungsbeispiel wird der Laserstrahl 200 zwischen der ersten λ/2-Platte 162 und dem ersten Anzeigebereich 1111 mittels eines dritten Spiegels 135 umgelenkt.

Die Strahlformoptik 160 ist bevorzugt zwischen einem ersten, abgeschalteten Funktionszustand und einem zweiten, zugeschalteten Funktionszustand schaltbar eingerichtet, indem wenigstens ein optisches Element der Strahlformoptik 160 räumlich in den Strahlpfad des Laserstrahls 200 hinein oder aus dem Strahlpfad heraus verlagerbar, und/oder zwischen zwei Schaltzuständen im Strahlpfad des Laserstrahls 200 schaltbar ist. Beispielsweise kann gemäß einer Ausgestaltung die erste λ/4-Platte 63 wahlweise aus dem Strahlpfad entfernt und in den Strahlpfad hinein verlagert werden, oder sie kann zwischen einem polarisationsdrehenden Zustand, insbesondere einer polarisationsdrehenden Winkelstellung, und einem polarisationswahrenden Zustand, insbesondere einer polarisationswahrenden Winkelstellung, hin und her geschaltet werden. Ein entsprechend schaltbares optisches Element kann auch als λ/2-Platte oder Verzögerungsplatte auf Flüssigkristallbasis ausgebildet sein.

Die Bearbeitungsoptik 170 weist hier neben dem Teleskop 171 noch einen vierten Spiegel 174 zum Umlenken des Laserstrahls 200, die Bearbeitungslinse 172, sowie außerdem eine zweite λ/4-Platte 173 auf, wobei mittels der zweiten λ/4-Platte 173 vorzugsweise zirkular polarisiertes Licht erzeugt wird, was Vorteile mit Blick auf die Bearbeitung des Werkstücks 300 haben kann. Auch komplexere Polarisationszustände sind vorzugsweise darstellbar. Beispielsweise kann die Bearbeitungsoptik auch eine s-Wellenplatte oder ein anderes geeignetes Element aufweisen, um insbesondere vektoriell polarisierte Strahlung, insbesondere radial polarisierte oder azimutal polarisierte Strahlung, zu erzeugen.

In dem ersten, abgeschalteten Funktionszustand der Strahlformoptik 160 wird bevorzugt der erste Funktionszustand der Anordnung 100 realisiert, der zuvor erläutert wurde.

In dem zweiten, zugeschalteten Funktionszustand wird bevorzugt ein zweiter Funktionszustand der Anordnung 100 realisiert, in welchem in dem ersten Anzeigebereich 1111 als erste Strahlbeeinflussungsstruktur eine Phasenbeeinflussungsstruktur erzeugt wird, durch die eine Amplitudenverteilung des Laserstrahls 200 beeinflusst wird, wobei eine Polarisation des Laserstrahls 200 zwischen dem ersten Anzeigebereich 1111 und dem zweiten Anzeigebereich 1112 verändert wird, wobei in dem zweiten Anzeigebereich 1112 als zweite Strahlbeeinflussungsstruktur eine Polarisationsbeeinflussungsstruktur erzeugt wird, durch welche die Polarisation des Laserstrahls 200 lokal beeinflusst wird, wobei vorzugsweise hinter dem zweiten Anzeigebereich 1112 Strahlanteile des Laserstrahls 200 mit bestimmter Polarisation gefiltert werden.

Vorzugsweise wird zwischen dem ersten Funktionszustand und dem zweiten Funktionszustand der Anordnung 100 umgeschaltet.

Im Rahmen des Verfahrens wird bevorzugt wenigstens eine Eigenschaft des Teststrahls 400 mittels der Diagnoseeinrichtung 150 ermittelt, wobei die erste Strahlbeeinflussungsstruktur und/oder die zweite Strahlbeeinflussungsstruktur in Abhängigkeit von der wenigstens einen ermittelten Eigenschaft verändert wird/werden. Der Teststrahl 400 wird hierzu bevorzugt aus dem Strahlpfad ausgekoppelt.

Es wird auch allgemein bevorzugt, dass der Laserstrahl 200 mit dem ansteuerbaren räumlichen Lichtmodulator 110 in Wechselwirkung gebracht wird, wobei wenigstens eine Eigenschaft des von dem Lichtmodulator 110 kommenden Teststrahls 400 insbesondere mittels der Diagnoseeinrichtung 150 ermittelt wird, wobei der Lichtmodulator 110 in Abhängigkeit von der wenigstens einen ermittelten Eigenschaft angesteuert wird. Der Teststrahl 400 wird hierzu bevorzugt aus dem Strahlpfad ausgekoppelt.

Fig. 3 zeigt eine schematische Darstellung eines Details eines dritten Ausführungsbeispiels der Anordnung 100. Dabei ist hier die Anzeigeebene 111 des Lichtmodulators 110 in drei Anzeigebereiche 1111, 1112, 1113 aufgeteilt, wobei der hier nicht dargestellte Laserstrahl 200 hinter dem zweiten Anzeigebereich 1112 mit dem dritten Anzeigebereich 1113 in Wechselwirkung gebracht wird. Durch Ansteuern des Lichtmodulators 110 wird in dem dritten Anzeigebereich 1113 eine dritte Strahlbeeinflussungsstruktur erzeugt, die vorzugsweise von der ersten Strahlbeeinflussungsstruktur und von der zweiten Strahlbeeinflussungsstruktur verschieden ist. Dabei wird vorzugsweise sowohl in dem ersten Anzeigebereich 1111 als auch in dem zweiten Anzeigebereich 1112 als Strahlbeeinflussungsstruktur jeweils eine Phasenbeeinflussungsstruktur erzeugt, wobei vorzugsweise durch die Phasenbeeinflussungsstruktur in dem ersten Anzeigebereich 1111 eine erste Amplitudenverteilung des Laserstrahls 200 nach einer ersten Propagationsstrecke beeinflusst und durch die Phasenbeeinflussungsstruktur in dem zweiten Anzeigebereich 1112 eine Phasenverteilung in einer Querschnittsebene des Laserstrahls 200 vergleichmäßigt oder eine zweite Amplitudenverteilung nach einer zweiten Propagationsstrecke, insbesondere auf dem dritten Anzeigebereich 1113, beeinflusst wird. Dabei wird eine Polarisation des Laserstrahls 200 zwischen dem zweiten Anzeigebereich 1112 und dem dritten Anzeigebereich 1113 verändert, insbesondere mittels der in Figur 2 dargestellten Strahlformoptik 160, wobei in dem dritten Anzeigebereich 1113 als dritte Strahlbeeinflussungsstruktur eine Polarisationsbeeinflussungsstruktur erzeugt wird, durch welche die Polarisation des Laserstrahls 200 lokal beeinflusst wird, wobei vorzugsweise hinter dem dritten Anzeigebereich 1113 Strahlanteile des Laserstrahls 200 mit bestimmter Polarisation gefiltert werden, insbesondere mittels der Polarisationstrenneinrichtung 161 gemäß Figur 2.

In Figur 3 ist die Anzeigeebene 111 des Lichtmodulators 100 beispielhaft symmetrisch in die drei Anzeigebereiche 1111, 1112, 1113 aufgeteilt. Dies ist nicht zwingend so vorgesehen. Alternativ ist es auch möglich, die Anzeigeebene 111 asymmetrisch in die verschiedenen Anzeigebereiche 1111, 1112, 1113 aufzuteilen. Dabei können beispielsweise der zweite Anzeigebereich 1112 und der dritte Anzeigebereich 1113 auch kleiner gewählt werden als der erste Anzeigebereich 1111. Auch müssen die verschiedenen Anzeigebereiche 1111, 1112, 1113 nicht notwendigerweise linear nebeneinander angeordnet sein, auch andere Anordnungen kommen infrage, beispielsweise die Teilung der Anzeigeebene 111 in einen ersten Bereich, der den ersten Anzeigebereich 1111 umfasst und in einen zweiten, daneben angeordneten Bereich, der dann übereinander den zweiten Anzeigebereich 1112 und den dritten Anzeigebereich 1113 aufweist.

Die Abbildung von dem ersten Anzeigebereich 1111 auf den zweiten Anzeigebereich 1112 erfolgt bevorzugt mittels einer 2f- oder 6f-Anordnung. Die Abbildung von dem zweiten Anzeigebereich 1112 auf den dritten Anzeigebereich 1113 erfolgt bevorzugt mittels einer 4f- oder 8f-Anordnung. Hier wird bevorzugt eine Abbildung von dem zweiten Anzeigebereich 1112 auf den dritten Anzeigebereich 1113 verwirklicht, mithin eine Bildebene erzeugt.

Insgesamt wird gemäß der hier offenbarten technischen Lehre eine kompakte und flexible Möglichkeit bereitgestellt, den Laserstrahl 200 zu formen.

## Patentansprüche

1. Anordnung (100) zum Formen eines Laserstrahls (200), mit
- einem ansteuerbaren räumlichen Lichtmodulator (110),
- einer Ansteuereinrichtung (120) zur Ansteuerung des Lichtmodulators (110), und
- einer Strahlführungsoptik (130), **dadurch gekennzeichnet, dass**
- die Ansteuereinrichtung (120) eingerichtet ist, um eine Anzeigeebene (111) des Lichtmodulators (110) in eine Mehrzahl von Anzeigebereichen (1111,1112,1113) zu teilen und in wenigstens einem ersten Anzeigebereich (1111) der Mehrzahl von Anzeigebereichen (1111,1112,1113) eine erste Strahlbeeinflussungsstruktur und in einem zweiten Anzeigebereich (1112) der Mehrzahl von Anzeigebereichen (1111,1112,1113) eine zweite Strahlbeeinflussungsstruktur darzustellen, und
- die Strahlführungsoptik (130) eingerichtet ist, um den Laserstrahl (200) entlang seiner Propagationsrichtung zunächst mit dem ersten Anzeigebereich (1111) und danach mit dem zweiten Anzeigebereich (1112) in Wechselwirkung zu bringen.

2. Anordnung (100) nach Anspruch 1, **dadurch gekennzeichnet, dass** die Strahlführungsoptik (130) mindestens einen Spiegel (131) aufweist, der angeordnet ist, um den von dem ersten Anzeigebereich (1111) kommenden Laserstrahl (200) zu dem zweiten Anzeigebereich (1112) zu lenken.

3. Anordnung (100) nach einem der vorhergehenden Ansprüche, **dadurch gekennzeichnet, dass** die Anordnung eine Diagnoseeinrichtung (150) aufweist, die eingerichtet ist, um wenigstens eine Eigenschaft eines von wenigstens einem Anzeigebereich (1111,1112) der Mehrzahl von Anzeigebereichen (1111,1112,1113) kommenden Teststrahls (400) zu ermitteln, wobei die Diagnoseeinrichtung (150) bevorzugt mit der Ansteuereinrichtung (120) wirkverbunden ist, um den Lichtmodulator (110) abhängig von der wenigstens einen ermittelten Eigenschaft des Teststrahls (400) anzusteuern.

4. Anordnung (100) nach einem der vorhergehenden Ansprüche, **gekennzeichnet durch** eine Auskoppeloptik (140), die eingerichtet und angeordnet ist, um den von dem wenigstens einen Anzeigebereich (1111,1112) der Mehrzahl von Anzeigebereichen (1111,1112,1113) kommenden Teststrahl (400) auf die Diagnoseeinrichtung (150) zu lenken.

5. Anordnung (100) nach einem der vorhergehenden Ansprüche, **gekennzeichnet durch** eine Strahlformoptik (160), die angeordnet und eingerichtet ist, um eine Polarisation des Laserstrahls (200) zwischen dem ersten Anzeigebereich (1111) und dem zweiten Anzeigebereich (1112) zu verändern, wobei die Strahlformoptik (160) vorzugsweise eine Polarisationstrenneinrichtung (161) aufweist, die angeordnet und eingerichtet ist, um verschieden polarisierte Strahlanteile des von dem zweiten Anzeigebereich (1112) kommenden Laserstrahls (200) zumindest teilweise voneinander zu trennen.

6. Anordnung (100) nach einem der vorhergehenden Ansprüche, **dadurch gekennzeichnet, dass** die Strahlformoptik (160) zwischen einem ersten, abgeschalteten Funktionszustand und einem zweiten, zugeschalteten Funktionszustand schaltbar eingerichtet ist, indem wenigstens ein optisches Element der Strahlformoptik (160)
a) räumlich in einen Strahlpfad des Laserstrahls (200) hinein und aus dem Strahlpfad heraus verlagerbar, und/oder
b) zwischen zwei Schaltzuständen im Strahlpfad des Laserstrahls (200) schaltbar ist.

7. Anordnung (100) nach einem der vorhergehenden Ansprüche, **gekennzeichnet durch** eine Bearbeitungsoptik (170), die angeordnet und eingerichtet ist, um den von dem Lichtmodulator (110) kommenden Laserstrahl (200) auf ein Werkstück (300) zu leiten.

8. Anordnung (100) nach einem der vorhergehenden Ansprüche, **dadurch gekennzeichnet, dass** die Diagnoseeinrichtung (150) eingerichtet ist, um den Lichtmodulator (110) zu kalibrieren, indem die Ansteuerung des Lichtmodulators (110) über ein Ansteuerintervall durchgestimmt wird, wobei für mindestens zwei Ansteuerbereiche des Lichtmodulators (110) eine dem jeweiligen Ansteuerbereich zugeordnete Intensität des Teststrahls (400) in Abhängigkeit von der Ansteuerung des Lichtmodulators (110) mittels der Aufnahmeeinrichtung erfasst wird, wobei die jeweiligen Intensitäten bei gleicher Ansteuerung miteinander verglichen werden, und wobei eine Korrektur der Ansteuerung für die mindestens zwei Ansteuerbereiche auf der Grundlage des Vergleichs ermittelt wird.

9. Anordnung (100) nach Anspruch 8, **dadurch gekennzeichnet, dass** die Diagnoseeinrichtung (150) eingerichtet ist, um, wenn eine insbesondere lineare Polarisation des Teststrahls (400) auf dem Lichtmodulator (110) - insbesondere relativ zu dem Lichtmodulator (110) - so ausgerichtet ist, dass der Lichtmodulator (110) den Polarisationszustand des Teststrahls (400) abhängig von seiner Ansteuerung verändert, eine Phasenverschiebung zwischen in Abhängigkeit von der Ansteuerung erfassten Intensitätsverläufen der mindestens zwei Ansteuerbereiche zu bestimmen, sowie um die Korrektur in Abhängigkeit von der Phasenverschiebung zu ermitteln.

10. Anordnung (100) nach einem der Ansprüche 8 oder 9, **dadurch gekennzeichnet, dass** die Diagnoseeinrichtung (150) eingerichtet ist, um die Korrektur der Ansteuerung für eine Mehrzahl von Ansteuerbereichen in Abhängigkeit von einem Strahlparameter und/oder einer Strahlwirkung des Teststrahls (400) auf dem Lichtmodulator (110) - vorzugsweise global oder lokal - zu ermitteln.

11. Verfahren zum Formen eines Laserstrahls (200), **dadurch gekennzeichnet, dass**
- der Laserstrahl (200) zunächst mit einem ersten Anzeigebereich (1111) eines ansteuerbaren räumlichen Lichtmodulators (110) in Wechselwirkung gebracht wird,
- der Laserstrahl (200) danach mit einem zweiten Anzeigebereich (1112) des ansteuerbaren räumlichen Lichtmodulators (110) in Wechselwirkung gebracht wird, und
- durch Ansteuern des Lichtmodulators (110) in dem ersten Anzeigebereich (1111) eine erste Strahlbeeinflussungsstruktur und in dem zweiten Anzeigebereich (1112) eine zweite Strahlbeeinflussungsstruktur erzeugt wird.

12. Verfahren nach Anspruch 11, **dadurch gekennzeichnet, dass** in einem ersten Funktionszustand sowohl in dem ersten Anzeigebereich (1111) als auch in dem zweiten Anzeigebereich (1112) als Strahlbeeinflussungsstruktur jeweils eine Phasenbeeinflussungsstruktur erzeugt wird, wobei vorzugsweise durch die Phasenbeeinflussungsstruktur in dem ersten Anzeigebereich (1111) eine erste Amplitudenverteilung des Laserstrahls (200) nach einer ersten Propagationsstrecke beeinflusst und durch die Phasenbeeinflussungsstruktur in dem zweiten Anzeigebereich (1112)
a) eine Phasenverteilung in einer Querschnittsebene des Laserstrahls (200) vergleichmäßigt und/oder
b) eine zweite Amplitudenverteilung nach einer zweiten Propagationsstrecke beeinflusst wird.

13. Verfahren nach einem der Ansprüche 11 oder 12, **dadurch gekennzeichnet, dass** in einem zweiten Funktionszustand in dem ersten Anzeigebereich (1111) als erste Strahlbeeinflussungsstruktur eine Phasenbeeinflussungsstruktur erzeugt wird, durch die eine Amplitudenverteilung des Laserstrahls (200) beeinflusst wird, wobei eine Polarisation des Laserstrahls (200) zwischen dem ersten Anzeigebereich (1111) und dem zweiten Anzeigebereich (1112) verändert wird, wobei in dem zweiten Anzeigebereich (1112) als zweite Strahlbeeinflussungsstruktur eine Polarisationsbeeinflussungsstruktur erzeugt wird, durch welche die Polarisation des Laserstrahls (200) lokal beeinflusst wird, wobei vorzugsweise hinter dem zweiten Anzeigebereich (1112) Strahlanteile des Laserstrahls (200) mit bestimmter Polarisation gefiltert werden.

14. Verfahren nach den Ansprüchen 12 und 13, **dadurch gekennzeichnet, dass** zwischen dem ersten Funktionszustand und dem zweiten Funktionszustand umgeschaltet wird.

15. Verfahren nach Anspruch 11, **dadurch gekennzeichnet, dass** der Laserstrahl (200) hinter dem zweiten Anzeigebereich (1112) mit einem dritten Anzeigebereich (1113) des ansteuerbaren räumlichen Lichtmodulators (110) in Wechselwirkung gebracht wird, wobei durch Ansteuern des Lichtmodulators (110) in dem dritten Anzeigebereich (1113) eine dritte Strahlbeeinflussungsstruktur erzeugt wird, wobei sowohl in einem ersten Anzeigebereich (1111) als auch in einem zweiten Anzeigebereich (1112) als Strahlbeeinflussungsstruktur jeweils eine Phasenbeeinflussungsstruktur erzeugt wird, wobei vorzugsweise durch die Phasenbeeinflussungsstruktur in dem ersten Anzeigebereich (1111) eine erste Amplitudenverteilung des Laserstrahls (200) nach einer ersten Propagationsstrecke beeinflusst und durch die Phasenbeeinflussungsstruktur in dem zweiten Anzeigebereich (1112)
a) eine Phasenverteilung in einer Querschnittsebene des Laserstrahls (200) vergleichmäßigt und/oder
b) eine zweite Amplitudenverteilung nach einer zweiten Propagationsstrecke beeinflusst wird, wobei eine Polarisation des Laserstrahls (200) zwischen dem zweiten Anzeigebereich (1112) und dem dritten Anzeigebereich (1113) verändert wird, wobei in dem dritten Anzeigebereich (1113) als dritte Strahlbeeinflussungsstruktur eine Polarisationsbeeinflussungsstruktur erzeugt wird, durch welche die Polarisation des Laserstrahls (200) lokal beeinflusst wird, wobei vorzugsweise hinter dem dritten Anzeigebereich (1112) Strahlanteile des Laserstrahls (200) mit bestimmter Polarisation gefiltert werden.

16. Verfahren nach einem der Ansprüche 11 bis 15, **dadurch gekennzeichnet, dass** wenigstens eine Eigenschaft eines von wenigstens einem beobachteten Anzeigebereich (1111,1112,1113) der Mehrzahl von Anzeigebereichen (1111,1112,1113) kommenden Teststrahls (400) ermittelt wird, wobei die Strahlbeeinflussungsstruktur des wenigstens einen beobachteten Anzeigebereichs (1111,1112,1113) in Abhängigkeit von der wenigstens einen ermittelten Eigenschaft verändert wird/werden.

17. Verfahren nach einem der Ansprüche 11 bis 16, **dadurch gekennzeichnet, dass** mit dem Laserstrahl (200) hinter dem Lichtmodulator (110) ein Werkstück (300) bestrahlt wird.

## Claims

1. An arrangement (100) for shaping a laser beam (200), comprising
- a controllable spatial light modulator (110),
- a control device (120) for controlling the light modulator (110), and
- beam-guiding optics (130), **characterized in that**
- the control device (120) is configured to divide a display plane (111) of the light modulator (110) into a plurality of display regions (1111, 1112, 1113) and to present at least a first beam-influencing structure in a first display region (1111) of the plurality of display regions (1111, 1112, 1113) and a second beam-influencing structure in a second display region (1112) of the plurality of display regions (1111, 1112, 1113), and
- the beam-guiding optics (130) are configured to bring the laser beam (200) into interaction initially with the first display region (1111) and then with the second display region (1112) along the direction of propagation of the beam.

2. The arrangement (100) according to claim 1, **characterized in that** the beam-guiding optics (130) comprise at least one mirror (131) arranged so as to direct the laser beam (200) coming from the first display region (1111) to the second display region (1112).

3. The arrangement (100) according to one of the preceding claims, **characterized in that** the arrangement comprises a diagnostic device (150) configured to determine at least one property of a test beam (400) coming from at least one display region (1111, 1112) of the plurality of display regions (1111, 1112, 1113), the diagnostic device (150) preferably being operatively connected to the control device (120) in order to control the light modulator (110) on the basis of the at least one determined property of the test beam (400).

4. The arrangement (100) according to one of the preceding claims, **characterized by** a decoupling optic (140) configured and arranged to direct the test beam (400) coming from the at least one display region (1111, 1112) of the plurality of display regions (1111, 1112, 1113) to the diagnostic device (150).

5. The arrangement (100) according to one of the preceding claims, **characterized by** beam-shaping optics (160) arranged and configured to change a polarization of the laser beam (200) between the first display region (1111) and the second display region (1112), wherein the beam-shaping optics (160) preferably comprise a polarization separating device (161) which is arranged and configured to separate from one another, at least partially, differently polarized beam portions of the laser beam (200) coming from the second display region (1112).

6. The arrangement (100) according to one of the preceding claims, **characterized in that** the beam-shaping optics (160) are configured to be switchable between a first, switched-off functional state and a second, switched-on functional state, **in that** at least one optical element of the beam-shaping optics (160) is
a) spatially displaceable into a beam path of the laser beam (200) and out of said beam path, and/or
b) switchable between two switching states while in the beam path of the laser beam (200).

7. The arrangement (100) according to one of the preceding claims, **characterized by** processing optics (170) arranged and designed to guide the laser beam (200) coming from the light modulator (110) onto a workpiece (300).

8. The arrangement (100) according to one of the preceding claims, **characterized in that** the diagnostic device (150) is configured to calibrate the light modulator (110) by tuning the control of the light modulator (110) over a control interval, a test beam (400) intensity associated with each control area being recorded by the recording device as a function of the control of the light modulator (110) for at least two control areas of the light modulator (110), the respective intensities being compared with one another under the same control, and a control correction being determined for the at least two control areas on the basis of the comparison.

9. The arrangement (100) according to claim 8, **characterized in that** the diagnostic device (150) is designed to specify a phase shift between intensity profiles, recorded as a function of the control, of the at least two control areas, and to determine the correction based on the phase shift if a polarization, in particular linear polarization, of the test beam (400) is oriented on the light modulator (110) - in particular relative to the light modulator (110) - in such a way that the light modulator (110) changes the polarization state of the test beam (400) on the basis of the control of the modulator.

10. The arrangement (100) according to one of claims 8 or 9, **characterized in that** the diagnostic device (150) is designed to determine the control correction for a plurality of control areas on the basis of a beam parameter and/or a beam effect of the test beam (400) on the light modulator (110) - preferably globally or locally.

11. A method for shaping a laser beam (200), **characterized in that**
- the laser beam (200) is initially brought into interaction with a first display region (1111) of a controllable spatial light modulator (110),
- the laser beam (200) is then brought into interaction with a second display region (1112) of the controllable spatial light modulator (110), and
- by controlling the light modulator (110), a first beam-influencing structure is generated in the first display region (1111) and a second beam-influencing structure is generated in the second display region (1112).

12. The method according to claim 11, **characterized in that** in a first functional state, a phase-influencing structure is generated both in the first display region (1111) and in the second display region (1112), respectively, as a beam-influencing structure, wherein preferably a first amplitude distribution of the laser beam (200) after a first propagation distance is influenced by the phase-influencing structure in the first display region (1111), and by the phase-influencing structure in the second display region (1112),
a) a phase distribution in a cross-sectional plane of the laser beam (200) is smoothed out and/or
b) a second amplitude distribution after a second propagation distance is influenced.

13. The method according to one of claims 11 or 12, **characterized in that** in a second functional state, a phase-influencing structure is generated in the first display region (1111) as a first beam-influencing structure, the phase-influencing structure influencing an amplitude distribution of the laser beam (200), wherein a polarization of the laser beam (200) is changed between the first display region (1111) and the second display region (1112), a polarization-influencing structure being generated in the second display region (1112) as a second beam-influencing structure, the polarization-influencing structure influencing the polarization of the laser beam (200) locally, beam portions of the laser beam (200) being filtered via defined polarization, preferably after the second display region (1112).

14. The method according to claims 12 and 13, **characterized in that** switching is done between the first functional state and the second functional state.

15. The method according to claim 11, **characterized in that** the laser beam (200) is brought into interaction with a third display region (1113) of the controllable spatial light modulator (110) after the second display region (1112), wherein by controlling the light modulator (110), a third beam-influencing structure is generated in the third display region (1113), a phase-influencing structure being generated both in a first display region (1111) and in a second display region (1112) as a beam-influencing structure, respectively, a first amplitude distribution of the laser beam (200) after a first propagation distance preferably being influenced by the phase-influencing structure in the first display region (1111) and by the phase-influencing structure in the second display region (1112),
a) a phase distribution in a cross-sectional plane of the laser beam (200) being smoothed out and/or
b) a second amplitude distribution after a second propagation distance being influenced,
wherein a polarization of the laser beam (200) is changed between the second display region (1112) and the third display region (1113), a polarization-influencing structure being generated in the third display region (1113) as a third beam-influencing structure, the polarization-influencing structure influencing the polarization of the laser beam (200) locally, beam portions of the laser beam (200) being filtered via defined polarization, preferably after the third display region (1112).

16. The method according to claims 11 to 15, **characterized in that** at least one property of a test beam (400) coming from at least one observed display region (1111, 1112, 1113) of the plurality of display regions (1111, 1112, 1113) is determined, wherein the beam-influencing structure(s) of the at least one observed display region (1111, 1112, 1113) is/are changed on the basis of at least one determined property.

17. The method according to any one of claims 11 to 16, **characterized in that** a workpiece (300) is irradiated by the laser beam (200) after the light modulator (110).

## Revendications

1. Agencement (100) pour former un faisceau laser (200), comprenant
- un modulateur de lumière spatial (110) pouvant être commandé,
- un dispositif de commande (120) pour commander le modulateur de lumière (110), et
- une optique de guidage de faisceau (130), **caractérisé en ce que**
- le dispositif de commande (120) est configuré pour diviser un plan d'affichage (111) du modulateur de lumière (110) en une pluralité de zones d'affichage (1111, 1112, 1113) et pour présenter une première structure influençant le faisceau dans au moins une première zone d'affichage (1111) de la pluralité de zones d'affichage (1111, 1112, 1113) et une deuxième structure influençant le faisceau dans une deuxième zone d'affichage (1112) de la pluralité de zones d'affichage (1111, 1112, 1113), et
- l'optique de guidage de faisceau (130) est configurée pour amener le faisceau laser (200) à interagir d'abord avec la première zone d'affichage (1111) et ensuite avec la deuxième zone d'affichage (1112) le long de la direction de propagation du faisceau.

2. Agencement (100) selon la revendication 1, **caractérisé en ce que** l'optique de guidage de faisceau (130) comprend au moins un miroir (131) agencé de manière à diriger le faisceau laser (200) provenant de la première zone d'affichage (1111) vers la deuxième zone d'affichage (1112).

3. Agencement (100) selon l'une des revendications précédentes, **caractérisé en ce que** l'agencement comprend un dispositif de diagnostic (150) configuré pour déterminer au moins une propriété d'un faisceau de test (400) provenant d'au moins une zone d'affichage (1111, 1112) de la pluralité de zones d'affichage (1111, 1112, 1113), le dispositif de diagnostic (150) étant de préférence relié fonctionnellement au dispositif de commande (120) afin de commander le modulateur de lumière (110) en fonction de la au moins une propriété déterminée du faisceau de test (400).

4. Agencement (100) selon l'une des revendications précédentes, **caractérisé par** une optique de découplage (140) configurée et agencée pour diriger le faisceau de test (400) provenant de la au moins une zone d'affichage (1111, 1112) de la pluralité de zones d'affichage (1111, 1112, 1113) vers le dispositif de diagnostic (150).

5. Agencement (100) selon l'une des revendications précédentes, **caractérisé par** une optique de mise en forme de faisceau (160) agencée et configurée pour modifier une polarisation du faisceau laser (200) entre la première zone d'affichage (1111) et la deuxième zone d'affichage (1112), dans lequel l'optique de mise en forme de faisceau (160) comprend de préférence un dispositif de séparation de polarisation (161) qui est agencé et configuré pour séparer au moins partiellement les unes des autres des parties de faisceau polarisées différemment du faisceau laser (200) provenant de la deuxième zone d'affichage (1112).

6. Agencement (100) selon l'une des revendications précédentes, **caractérisé en ce que** l'optique de mise en forme de faisceau (160) est configurée pour pouvoir être commutée entre un premier état fonctionnel désactivé et un second état fonctionnel activé, **en ce qu'**au moins un élément optique de l'optique de mise en forme de faisceau (160) peut être
a) déplacé spatialement dans un trajet de faisceau du faisceau laser (200) et hors du trajet de faisceau, et/ou
b) commuté entre deux états de commutation dans le trajet du faisceau laser (200).

7. Agencement (100) selon l'une des revendications précédentes, **caractérisé par** une optique de traitement (170) agencée et configurée pour guider le faisceau laser (200) provenant du modulateur de lumière (110) sur une pièce (300).

8. Agencement (100) selon l'une des revendications précédentes, **caractérisé en ce que** le dispositif de diagnostic (150) est configuré pour calibrer le modulateur de lumière (110) en calant la commande du modulateur de lumière (110) sur un intervalle de commande, dans lequel, pour au moins deux zones de commande du modulateur de lumière (110), une intensité du faisceau de test (400) associée à la zone de commande respective est détectée en fonction de la commande du modulateur de lumière (110) au moyen du dispositif d'enregistrement, les intensités respectives étant comparées entre elles avec une même commande, et dans lequel une correction de la commande pour les au moins deux zones de commande est déterminée sur la base de la comparaison.

9. Agencement (100) selon la revendication 8, **caractérisé en ce que** le dispositif de diagnostic (150) est configuré pour spécifier un déphasage entre des courbes d'intensité, enregistré en fonction des commandes, des au moins deux zones de commande, et pour déterminer la correction en fonction du déphasage si une polarisation, notamment une polarisation linéaire, du faisceau de test (400) est orientée sur le modulateur de lumière (110) - notamment par rapport au modulateur de lumière (110) - d'une manière telle que le modulateur de lumière (110) modifie l'état de polarisation du faisceau de test (400) en fonction de la commande du modulateur.

10. Agencement (100) selon l'une des revendications 8 ou 9, **caractérisé en ce que** le dispositif de diagnostic (150) est configuré pour déterminer, de préférence globalement ou localement, la correction de la commande pour une pluralité de zones de commande en fonction d'un paramètre de faisceau et/ou d'un effet de faisceau du faisceau de test (400) sur le modulateur de lumière (110).

11. Procédé de mise en forme d'un faisceau laser (200),
**caractérisé en ce que**
- le faisceau laser (200) est d'abord amené à interagir avec une première zone d'affichage (1111) d'un modulateur spatial de lumière (110) pouvant être commandé,
- le faisceau laser (200) est ensuite amené à interagir avec une deuxième zone d'affichage (1112) du modulateur spatial de lumière (110) pouvant être commandé, et
- par la commande du modulateur de lumière (110), une première structure influençant le faisceau est générée dans la première zone d'affichage (1111) et une deuxième structure influençant le faisceau est générée dans la deuxième zone d'affichage (1112).

12. Procédé selon la revendication 11, **caractérisé en ce que**, dans un premier état fonctionnel, une structure influençant la phase est générée aussi bien dans la première zone d'affichage (1111) que dans la deuxième zone d'affichage (1112), respectivement, en tant que structure influençant le faisceau, dans lequel, de préférence, une première répartition d'amplitude du faisceau laser (200) après un premier trajet de propagation est influencée par la structure influençant la phase dans la première zone d'affichage (1111) et par la structure influençant la phase dans la deuxième zone d'affichage (1112)
a) une distribution de phase dans un plan en section transversale du faisceau laser (200) est uniformisée et/ou
b) une deuxième distribution d'amplitude est influencée après un deuxième trajet de propagation.

13. Procédé selon l'une des revendications 11 ou 12, **caractérisé en ce que**, dans un deuxième état fonctionnel, une structure influençant la phase est générée dans la première zone d'affichage (1111) en tant que première structure influençant le faisceau, la structure influençant la phase influençant une répartition d'amplitude du faisceau laser (200), dans lequel une polarisation du faisceau laser (200) est modifiée entre la première zone d'affichage (1111) et la deuxième zone d'affichage (1112), une structure influençant la polarisation étant générée dans la deuxième zone d'affichage (1112) en tant que deuxième structure influençant le faisceau, la structure influençant la polarisation influençant la polarisation du faisceau laser (200) localement, des parties de faisceau du faisceau laser (200) étant filtrées via une polarisation définie, de préférence après la deuxième zone d'affichage (1112).

14. Procédé selon les revendications 12 et 13, **caractérisé en ce qu'**une commutation est opérée entre le premier état fonctionnel et le deuxième état fonctionnel.

15. Procédé selon la revendication 11, **caractérisé en ce que** le faisceau laser (200) est amené à interagir avec une troisième zone d'affichage (1113) du modulateur spatial de lumière (110) pouvant être commandé après la deuxième zone d'affichage (1112), dans lequel par la commande du modulateur de lumière (110), une troisième structure influençant le faisceau est générée dans la troisième zone d'affichage (1113), une structure influençant la phase étant générée aussi bien dans une première zone d'affichage (1111) que dans une deuxième zone d'affichage (1112) en tant que structure influençant le faisceau, respectivement, une première répartition d'amplitude du faisceau laser (200) après un premier trajet de propagation étant de préférence influencée par la structure influençant la phase dans la première zone d'affichage (1111) et par la structure influençant la phase dans la deuxième zone d'affichage (1112),
a) une répartition de phase dans un plan en section transversale du faisceau laser (200) étant uniformisée et/ou
b) une deuxième répartition d'amplitude après un deuxième trajet de propagation étant influencée,
une polarisation du faisceau laser (200) étant modifiée entre la deuxième zone d'affichage (1112) et la troisième zone d'affichage (1113), une structure influençant la polarisation étant générée dans la troisième zone d'affichage (1113) en tant que troisième structure influençant le faisceau, la structure influençant le faisceau influençant la polarisation du faisceau laser (200) localement, des parties de faisceau du faisceau laser (200) étant filtrées via une polarisation définie, de préférence après la troisième zone d'affichage (1112).

16. Procédé selon l'une quelconque des revendications 11 à 15, **caractérisé en ce qu'**au moins une propriété d'un faisceau de test (400) provenant d'au moins une zone d'affichage (1111, 1112, 1113) observée de la pluralité de zones d'affichage (1111, 1112, 1113) est déterminée, dans lequel la/les structure(s) influençant le faisceau d'au moins une zone d'affichage (1111, 1112, 1113) observée est/sont modifiée(s) en fonction d'au moins une propriété déterminée.

17. Procédé selon l'une quelconque des revendications 11 à 16, **caractérisé en ce qu'**une pièce (300) est irradiée par le faisceau laser (200) après le modulateur de lumière (110).
